(19)

**Europäisches Patentamt**
**European Patent Office**
**Office européen des brevets**

(11) **EP 4 723 457 A1**

(12) **EUROPEAN PATENT APPLICATION**

(43) Date of publication:
08.04.2026  Bulletin 2026/15

(21) Application number: 25206032.2

(22) Date of filing: 01.10.2025

(51) International Patent Classification (IPC):
$H02M\ 1/00^{(2006.01)}$   $H02M\ 3/00^{(2006.01)}$
$H02M\ 3/335^{(2006.01)}$

(52) Cooperative Patent Classification (CPC):
H02M 3/33571; H02M 1/0025; H02M 1/0032;
H02M 1/0095; H02M 3/01; H02M 3/33523

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 04.10.2024  US 202463703463 P
11.09.2025  US 202519325810

(71) Applicant: Power Integrations, Inc.
San Jose, CA 95138 (US)

(72) Inventors:
• Sheng, Liu
San Jose, 95135 (US)
• Odell, Arthur B.
Morgan Hill, 95037 (US)
• Saint-Pierre, Jr., Roland Sylvere
San Jose, 95135 (US)
• Sundararaj, Sundaresan
Union City, 94587 (US)
• Wang, Qing
Los Gatos, 95032 (US)
• Wang, Yueming
Milpitas, 95035 (US)

(74) Representative: Fish & Richardson P.C.
Highlight Business Towers
Mies-van-der-Rohe-Straße 8
80807 München (DE)

(54) **A HIGH SIDE ON-TIME CONTROL CIRCUIT AND METHOD FOR AN ASYMMETRICAL HALF-BRIDGE POWER CONVERTER**

(57)    The circuits and methods of the present disclosure control the active off-time (high side switch on-time) to ensure the magnetization energy release and resonant capacitor energy release in an asymmetrical half-bridge (AHB) converter finish at the same time and all the stored energy is delivered to the output in each switching cycle. Multiple, parallel, techniques to control the high side switch on-time are illustrated. One is to track the volt-seconds applied during the storage cycle and allow the active release off-time to be limited to the same volt-seconds. A second option is to provide a high side switch on-time that is proportional to the on-time of the low side switch in that switching cycle. A third option is to provide a maximum high side switch on-time that can be programmed to ensure the high side on-time is equal to or smaller than half of the resonant period.

FIG. 1

**Description**

CROSS-REFERENCE TO RELATED APPLICATIONS

This application claims the benefit of U.S. provisional Application No. 63/703,463, filed October 4, 2024, and U.S. non-provisional Application No. 19/325,810, filed September 11, 2025, which are incorporated by reference in its entirety.

FIELD OF THE DISCLOSURE

The present disclosure relates generally to power converters and, more particularly, to control circuits and methods for controlling an asymmetrical half-bridge power converter.

BACKGROUND INFORMATION

The asymmetrical capacitively coupled resonant flyback converter (AHB) has significant advantages over the more typical flyback converters at high output voltages and output power. The AHB converter combines storage of energy in the magnetizing of the transformer and storage in a capacitor that is part of a resonant tank, this may be referred to as the storage cycle. When the storage cycle is ended, the energy from the magnetization of the transformer and the energy stored in the resonant capacitor is released to the power converter output. The energy in the resonant capacitor forms a resonant release cycle with the leakage inductance of the transformer.

Ideally, at maximum output voltage and power, the magnetization energy release and resonant capacitor energy release finish at the same time and all the stored energy is delivered to the output. However, in real world operation at maximum output voltage, the magnetization will finish early and start to cycle energy back to the primary side of the power converter. This is inefficient and potentially causes the output to collapse at lighter loads.

The typical means of control for the AHB power converter are complex, and includes burst mode operation at lighter output loads, further increasing complexity and reducing performance.

SUMMARY OF THE DISCLOSURE

Typical means of control for the asymmetrical half-bridge (AHB) power converters, such as burst mode operation, are complex and result in recognized drawbacks in such designs. The present disclosure provides examples of control circuits and methods for controlling the on-time of the high side switch in an asymmetrical half-bridge power converter that overcome the drawbacks of other control methodologies.

The AHB converter includes a high side switch coupled to the positive rail of the input voltage and a low side switch coupled to the input return of the AHB converter. The energy storage cycle in the AHB converter occurs when the low side switch is on, and the energy release occurs when the low side switch is off.

The circuits and methods of the present disclosure control the active off-time (the time that the high side switch is on) to ensure that the magnetization energy release and resonant capacitor energy release in the AHB converter finish at the same time and all the stored energy is delivered to the output in each switching cycle.

For example, if the AHB converter is designed for adjustable wide range output, at lower output voltage settings the magnetization release will take longer than the resonant release period. In that case the high side switch on-time is made to be the same as the resonant period such that the magnetization release has sufficient time to deliver all the stored energy to output, but not to the resonant cap.

The circuits and methods of the present disclosure can provide multiple, parallel, techniques to control the high side switch on-time. One option as described herein is to track the volt-seconds applied during the storage cycle and allow the active release off-time to be limited to the same volt-seconds. This is done by integrating a signal representative of a primary side winding voltage to determine the high side switch on-time.

A second option for controlling the high side switch on-time as described herein is to provide a high side switch on-time that is proportional to the on-time of the low side switch in that switching cycle. A third option for controlling the high side switch on-time as described herein is to provide a maximum high side switch on-time that can be programmed to ensure the high side on-time to be equal to or smaller than half of the resonant period. The resonance is due to the transformer leakage inductor and the resonant capacitor.

BRIEF DESCRIPTION OF THE DRAWINGS

Non-limiting and non-exhaustive embodiments of controlling a secondary switch to achieve zero voltage switching are described with reference to the following figures, wherein like reference numerals refer to like parts throughout the various views unless otherwise specified.

**FIG. 1** illustrates an example asymmetrical half-bridge (AHB) power converter comprising a primary controller implementing an example high side on-time control circuit and method according to the teachings of the present disclosure.

**FIG. 2** illustrates example waveforms associated with the operation of the AHB power converter 100 of **FIG. 1.**

**FIG. 3** illustrates a functional block diagram for an example primary controller implementing an example high side on-time control circuit according to the teachings of the present disclosure.

**FIG. 4** illustrates a simplified diagram of an example Volt-second on-time block of an example high side control block according to the teachings of the present disclosure.

**FIG. 5** illustrates a simplified diagram of an example Proportional on-time block of an example high side on-time control circuit according to the teachings of the present disclosure.

**FIG. 6** illustrates a simplified diagram of an example maximum high side on-time block of an example high side on-time control circuit according to the teachings of the present disclosure.

**FIG. 7** illustrates a more detailed circuit diagram for an example volt-second high side on-time block of an example high side on-time control circuit according to the teachings of the present disclosure.

**FIG. 8** illustrates a more detailed circuit diagram for an example proportional high side on-time block of an example high side on-time control circuit according to the teachings of the present disclosure.

**FIG. 9** illustrates a more detailed circuit diagram for an example maximum high side on-time block of an example high side on-time control circuit according to the teachings of the present disclosure.

**FIG. 10** illustrates a flow diagram describing an example method for controlling the high side switch on-time using a volt-second calculation for use in an asymmetric half-bridge power converter according to the teachings of the present disclosure.

**FIG. 11** illustrates a flow diagram describing another example method for controlling the on-time of a high side switch in an AHB power converter according to the teachings of the present disclosure.

**FIG. 12A** illustrates a voltage-second (volt-sec) on-time circuit according to an embodiment of the present disclosure.

**FIG. 12B** illustrates waveforms according to the embodiment of FIG. 12A.

**FIG. 12C** illustrates a buffer circuit according to an embodiment of the present disclosure.

**FIG. 12D** illustrates a trigger circuit according to an embodiment of the present disclosure.

**FIG. 13A** illustrates waveforms according to an embodiment of the present disclosure.

**FIG. 13B** illustrates waveforms according to another embodiment of the present disclosure.

**FIG. 14** illustrates a trigger circuit according to another embodiment of the present disclosure.

**FIG. 15** illustrates waveforms according to the embodiment of FIG. 14.

**FIG. 16** illustrates a trigger circuit according to another embodiment FIG. 14.

**FIG. 17** illustrates waveforms according to the embodiment of FIG. 16.

Corresponding reference characters indicate corresponding components throughout the several views of the drawings. Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the teachings herein. Also, common but well-understood elements that are useful or necessary in a commercially feasible embodiment are often not depicted in order to facilitate a less obstructed view of these various embodiments of controlling a secondary switch to achieve zero voltage switching.

DETAILED DESCRIPTION

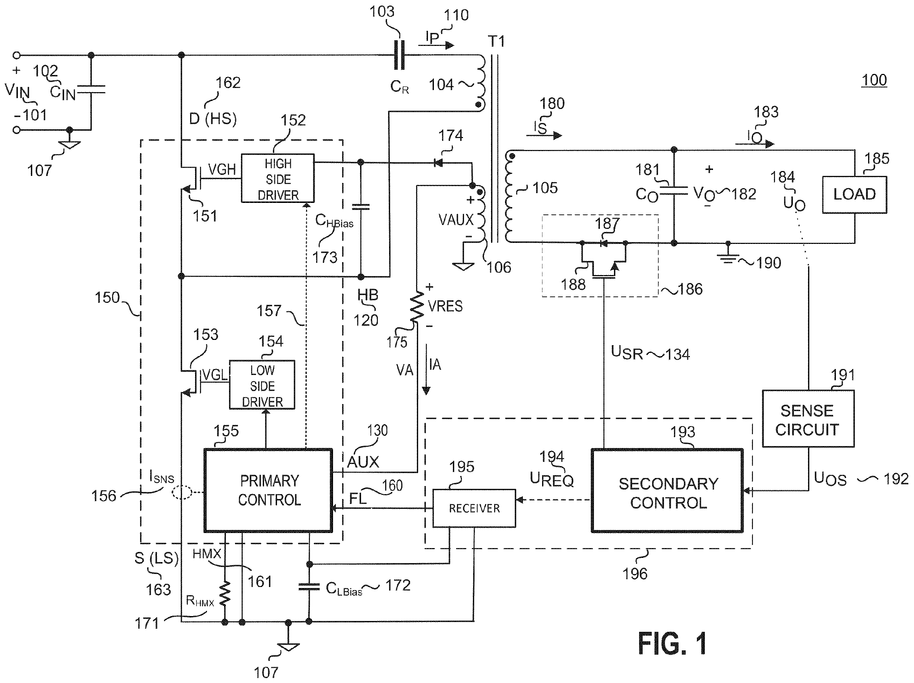

**FIG. 1** shows an example AHB power converter 100 according to the teachings of the present disclosure. AHB power converter 100 comprises an input voltage source $V_{IN}$ 101. Input voltage source $V_{IN}$ 101 can be from a rectified AC input or a substantially DC input. Input capacitor $C_{IN}$ 102 is coupled between the positive terminal of $V_{IN}$ 101 and primary ground 107.

AHB power converter 100 comprises a power transformer T1 which has a primary winding 104, a secondary winding 105 and an auxiliary winding 106. A resonance capacitor $C_R$ 103 is coupled between input capacitor $C_{IN}$ 102 and primary winding 104. The opposite end of primary winding 104 is coupled to half-bridge node HB 120. During operation, a primary side current $I_P$ 110 flows through primary winding 104 as will be discussed in more detail below.

AHB power converter 100 comprises a primary controller 150. Primary controller 150 may, in one example, be embodied in circuitry packaged in a single integrated circuit package. In other examples, primary controller 150 may be embodied in circuitry packaged in multiple packages. Primary controller 150 comprises a high side switch 151 and a low side switch 153. In some examples, either or both switches 151 and 153 may be within the same integrated circuit package as control circuitry or may be separately packaged from the control circuitry.

High side switch 151 and low side switch 153 are high-voltage transistor switches and in one example, may be a transistor such as a metal-oxide-semiconductor field-effect transistor (MOSFET), bipolar junction transistor (BJT), an insulated-gate bipolar transistor (IGBT), high-electron-mobility transistor (HEMT), a gallium nitride (GaN) based transistor or a silicon carbide (SiC) based transistor. In another example the high side and/or low side switch may be a cascode switch including a normally-on first switch and a normally-off second switch coupled together in a cascode configuration. The first switch may generally be a GaN or SiC based transistor while the second switch may be a MOSFET, BJT, or IGBT.

Primary controller 150 includes drain terminal D 162 coupled to input voltage source $V_{IN}$ 101 and source terminal S 163 coupled to primary ground 107. The drain of high side switch 151 is coupled to the drain terminal D 162 while the source of low side switch 153 is coupled to the source terminal. The source of high side switch 151 and the drain of low side switch 153 are coupled together and to half-bridge node HB 120 which is coupled as an input of primary controller 150.

Primary controller 150 comprises high side driver 152 which generates appropriate output signals to drive high side switch 151 on and off. Primary controller 150 also comprises low side driver 154 which generates appropriate output signals to drive low side switch 153 on and off.

Primary controller 150 also comprises primary control block 155 which generates the control signals to instruct high side driver 152 and low side driver 154 to turn on/off high side switch 151 and low side switch 153, respectively, as will be discussed in more detail below. Primary controller 150 comprises communication path 157 for communicating control signals from primary control block 155 to high side driver 152.

AHB power converter 100 comprises capacitor $C_{LBias}$ 172 to provide a source of bias power to primary control block 155 and low side driver 154 of primary controller 150. AHB power converter 100 comprises capacitor $C_{HBias}$ 173 to provide a source of bias power to high side driver 152 of primary controller 150. Diode 174 is coupled between auxiliary winding 106 and capacitor $C_{HBIAS}$ 173 to provide a source of current to maintain the voltage on capacitor $C_{HBIAS}$ 173.

Primary control block 155 comprises an input AUX 130 for receiving a signal through a resistor 175 representative of the voltage across auxiliary winding 106. Primary control block 155 also comprises an input FL 160 for receiving signals from the secondary side of AHB power converter 100 and for controlling low side switch 153 as will be discussed in more detail below.

Primary control block 155 also comprises an input $I_{SNS}$ 156 for receiving a signal representative of the current through low side switch 153 and for controlling low side switch 153 as will be discussed in more detail below. Primary control block 155 also comprises an input HMX 161 for receiving the voltage across resistor $R_{HMX}$ 171 for setting the maximum on-time for the high side switch 151 as will be discussed in more detail below.

AHB power converter 100 also comprises an output capacitor Co 181, coupled across secondary winding 105. In operation, secondary current $I_S$ 180 flows through secondary winding 105 and develops output voltage Vo 182 on the output capacitor Co 181. Output current Io 183 is supplied to a load 185 coupled to the output capacitor Co 181 and secondary ground 190.

AHB power converter 100 comprises a synchronous rectifier 186 comprising transistor 188 and diode 187. Diode 187 may be the inherent diode of transistor 188 or a separate component. In other examples, AHB power converter may include just a diode, rather than synchronous rectifier 186.

AHB power converter 100 comprises sense circuit 191 configured to sense output quantity Uo 184 and to generate output sense signal Uos 192 which is representative of $U_O$ 184. Uo 184 may be indicative of output voltage Vo 182, output current Io 183, or a combination of both. AHB power converter 100 also comprises secondary controller 196. Secondary controller 196 comprises secondary control block 193 that is configured to receive output sense signal $U_{OS}$ 192 and to generate synchronous rectifier control signal $U_{SR}$ 134 and request signal $U_{REQ}$ 194.

Primary controller 150 and secondary controller 196 may, collectively, be referred to as a control system for AHB power converter 100.

Request signal $U_{REQ}$ 194 is a signal that represents the energy needed by load 185. In one example, request signal $U_{REQ}$ 194 may represent a signal communicated to primary controller 150 to request additional power be transmitted from the input to the output of AHB power converter 100. In one example, request signal $U_{REQ}$ 194 may be transmitted from the secondary control block 193 through a transmission mechanism that provides galvanic isolation between the input and output of AHB power converter 100. In one example, request signal $U_{REQ}$ 194 may be transmitted through a FluxLink™ component, which is available from Power Integrations, Inc.

Secondary controller 196 comprises receiver 195, which is referenced to primary ground 107 and is configured to receive request signal $U_{REQ}$ 194 and generate a signal in response thereto to be coupled to the FL input 160 of primary controller 150. Output sense signal Uos 192, request signal $U_{REQ}$ 194 and the signal at the FL input 160 may all be referred to as "feedback" signals because they all provide information about the output for use on the primary side of the AHB power converter.

In one example, secondary controller 196 may be implemented in a single integrated circuit package. In other examples, the components of secondary controller 196 may be implemented in multiple packages.

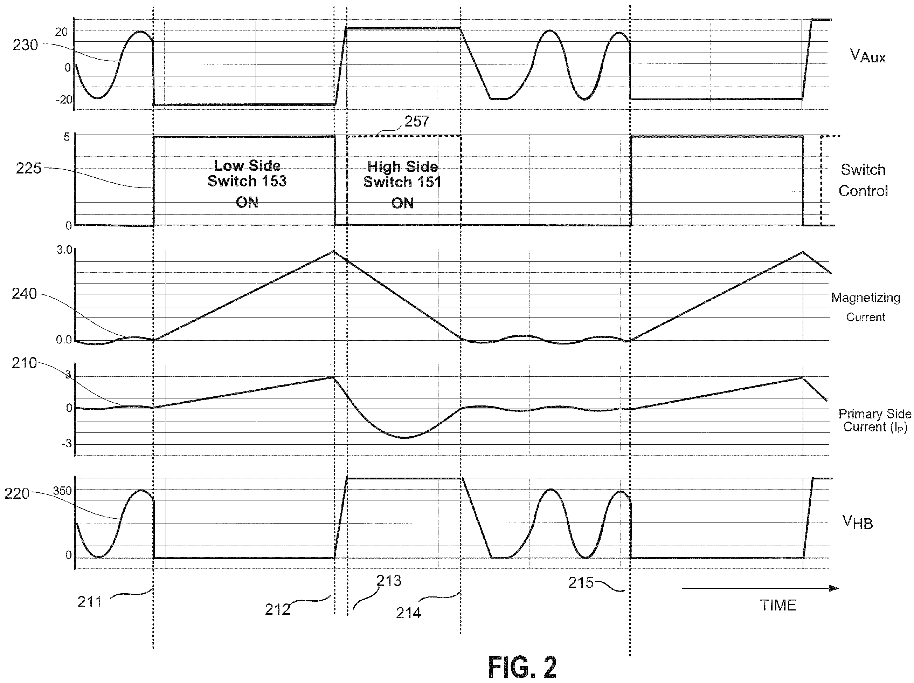

**FIG. 2** illustrates waveforms for signals within AHB power converter 100 during one complete switching cycle of the converter and a portion of a subsequent cycle. As presented in FIG. 2, the waveforms share an x-axis which represents elapsed time.

Waveform 210 represents primary side current IP 110 of AHB power converter 100 over time. Waveform 220 represents the voltage at the half-bridge node HB 120 of AHB power converter 100 over time. Waveform 230 represents the sensed voltage of the auxiliary winding 106 at the AUX input 130 of primary controller 150 over time. Waveform 240 represents the magnetizing current in the transformer T1 of AHB power converter 100 over time.

Waveforms 225 and 257 represent the control signals generated by the primary control block 155 that control switching of the low side switch 153 and high side switch 151, respectively, of AHB power converter 100 over time.

Tracing the waveforms of **FIG. 2** from left to right, at time 211, low side switch control signal 225 transitions from low to high, indicating that low side switch 153 is turned on. While, in the example, the turn on control signal 225 is indicated as transitioning from low to high, as will be understood by those of skill in the art, the control signal logic could also be inverted. At time 211, the turn on of the low side switch 153 causes VHB 220 and VAUX 230 to go low, while the primary side current IP 210 and magnetizing current 240 within primary winding 104 begin to ramp up. These currents will continue to increase during the duration in which low side switch 153 is on.

At time 212, low side switch control signal 225 transitions from high to low, indicating that low side switch 153 is turned off. In response to the low side switch 153 turn off, at time 212, VAUX 230 and VHB 220 start to rise. Also at time 212, the magnetizing current 240 and primary side current IP 210 waveforms begin to decrease.

At time 213, high side switch control signal 257 transitions from low to high, indicating that high side switch 151 is turned on. While, in the example, the turn on control signal 257 is indicated as transitioning from low to high, as will be understood by those of skill in the art, the control signal logic could also be inverted.

Between time 212 when low side switch 153 turns off, and time 213 when high side switch 151 turns on, a deadtime is maintained. This deadtime is maintained to ensure that there is no overlap in the conduction of low side switch 153 and high side switch 151 so as to prevent potential cross-conduction. The deadtime between the turn off of low side switch 153 and the turn on of high side switch 151 may, in one example, be a fixed time period. In other examples the deadtime may be adaptive and dependent on operating conditions within AHB power converter 100.

At time 213, the turn on of the high side switch 151 causes the VHB 220 and VAUX 230 voltages to be clamped at their maximum values. In one example, the maximum value of VHB 220 may be in the range of between 100 and 420 volts. In one example, the maximum value of VAUX 230 may be in the range of between 5 to 70 volts.

At time 214, high side switch control signal 257 transitions from high to low, indicating that high side switch 151 is turned off. In the example shown in **FIG. 2,** at time 214 the waveforms for the magnetizing current 240 and the primary side current 210 are close to or at zero, indicating that energy delivery has completed for that switching cycle.

As will be explained in more detail below, the on-time of the high side switch 151 (the time between time 213 and time 214 in the example of **FIG. 2)** is controlled by the primary controller 150 in a manner to keep the high side switch 151 on long enough such that the magnetization release has sufficient time to deliver substantially all the stored energy to the output of the AHB power converter.

Between time 214 and time 215, the voltage waveforms VHB 220 and VAUX 230 will fall and then resonate in a sinusoidal manner at a frequency and magnitude determined by the Coss of low side switch 153 and high side switch 151 and the magnetizing inductance of the primary winding 104 of transformer T1. Similarly, the magnetizing current waveform 240 and the primary current waveform 210 will also vary in a sinusoidal manner around zero. Because of the relaxation ringing, there is resonant current going through the magnetizing inductance of transformer TI primary winding 104.

At time 215, the low side switch control 225 transitions from low to high again and starts the next switching cycle which repeats in a similar manner as previously discussed.

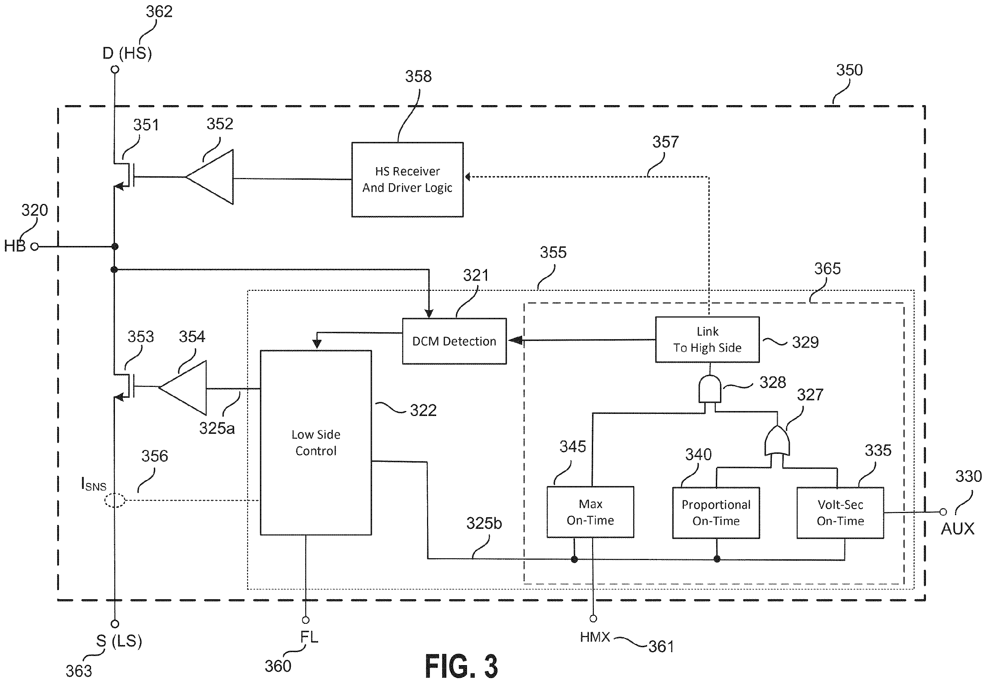

**FIG. 3** shows an example primary controller 350, which corresponds to primary controller 150 of the example shown in **FIG. 1.** As shown in **FIG. 3,** the example primary controller 350 is implemented in a single integrated circuit package with several terminals configured to be coupled to the remaining components of an AHB power converter. In other examples, the components of primary controller 350 may be implemented in multiple packages.

Primary controller 350 incorporates a high side switch 351 and associated high side driver 352, as well as a low side switch 353 and associated low side driver 354. In some examples, high side switch 351 and/or low side switch 153 may be packaged in the same integrated circuit package with the control circuitry and in other examples they may be packaged separately. Primary controller 350 has a drain terminal D (HS) 362, for coupling the drain of high side switch 351 to an input voltage. Primary controller also has a source terminal S (LS) 363, for coupling the source of the low side switch 353 to a ground reference. Primary controller 350 has a terminal HB 320, for coupling the source of high side switch 351 and the drain of low side switch 353 to the half-bridge node of an AHB power converter.

Primary controller 350 has a terminal FL 360, configured to receive a signal from a secondary side of an AHB power converter to control switching of low side switch 353. In one example, the signal received at terminal FL may be a request signal that represents a request that additional power be transmitted from the input to the output of AHB power converter 100.

Primary controller 350 has a terminal AUX 330, configured to receive a signal representative of the voltage across an auxiliary winding of an AHB power converter. Primary controller 350 also has a terminal HMX 361, configured to receive a signal for programming the maximum on-time of high side switch 351.

Although not shown, as a person of skill in the art will understand, primary controller 350 will also have an input terminal for receiving a source of operating bias for the low side components and an input terminal for receiving a source of operating bias for the high side components. Other terminals for implementing other features and functions could also be implemented in various examples of primary controller 350 consistent with the teachings of the present disclosure.

Primary controller 350 includes primary control block 355 which corresponds to primary control block 155 of the example shown in **FIG. 1.** Primary control block 355 comprises DCM detection block 321, low side control block 322 and high side control block 365.

DCM detection block 321 is configured to receive a signal ($V_{HB}$) representative of the voltage at the half-bridge node HB 320 of the AHB power converter. DCM detection block 321 is configured to detect a discontinuous conduction mode of operation in the AHB power converter. DCM detection block 321 is further configured to implement a deadtime period between the switching of the high and low side switches to ensure that both switches are never on at the same time so as to prevent potential cross-conduction in the AHB power converter.

Low side control block 322 is configured to receive a signal from the secondary side of an AHB power converter through terminal FL 360. In one example, the signal at terminal FL could comprise a series of pulses arriving at a variable frequency, where each received pulse indicates that a switching cycle should be initiated. In other examples, the signal could take other forms to represent the status of an output load of a power converter.

Low side control block 322 receives the signal at terminal FL 360 and the output of DCM detection block 321 and generates low side switch control signal 325a to control the operation of low side switch 353. Low side switch control signal 325a is input to low side driver 354 which responsively generates appropriate drive signals at the gate of low side switch 353 to control turn on and turn off of the low side switch 353.

In some examples, low side control block 322 is configured to receive $I_{SNS}$ signal 356 which is representative of the current through low side switch 353. In some examples, low side control block 322 will respond to $I_{SNS}$ signal 356 to turn off low side switch 353 when the current through the low side switch 353 reaches a current threshold. As will be understood by those of skill in the art, other methodologies for controlling the on-time of low side switch 353 may be implemented consistent with the teaching of the present disclosure.

Low side control block 322 also outputs a copy of the low side switch control signal 325b as an input to high side control block 365. As will be understood by those of skill in the art, control signal 325b can be the same signal as 325a, routed to multiple destinations. In the disclosed example, low side switch control signal 325b is a logic level voltage that is in a first state when low side switch 353 is on (conducting current) and is in a second state when low side switch 353 is off (not conducting any substantial current). In other examples, low side switch control signal 325b may represent the operation of low side switch 353 in other analog, logic or digital form.

The example high side control block 365 implements three functional blocks for controlling the on-time of high side switch 351. In other examples, all three functional blocks need not be implemented and may be implemented individually or in various combinations consistent with the teachings of the present disclosure.

Volt-sec on-time block 335 is configured to receive low side switch control signal 325b as well as a signal at terminal AUX 330, which is representative of the voltage across an auxiliary winding of an AHB power converter. As will be discussed in more detail below, volt-sec on-time block 335 uses the signal from terminal AUX 330 to generate an output signal to control the high side switch on-time to achieve a volt-second balanced operation in an AHB power converter.

Proportional on-time block 340 is configured to receive low side switch control signal 325b and to generate an output signal to control the high side switch on-time to be proportional to the on-time of low side switch 353 in each switching cycle, as will be explained in more detail below.

Max on-time block 345 is configured to receive low side switch control signal 325b as well as a signal at terminal HMX 361, which is an input signal that allows the maximum high side switch on-time to be programmed, as will be explained in more detail below.

**In** the example high side control block 365, the output of Volt-sec on-time block 335 and the output of Proportional on-time block 340 are coupled to OR gate 327. The output of OR gate 327 is coupled to AND gate 328 along with the output of Max on-time block 345. In the example of **FIG. 3,** the outputs of Volt-sec on-time block 335, Proportional on-time block 340 and Max on-time block 345 will transition to a logic high state to initiate turn on of high side switch 351. As will be explained in more detail below, the output of each block will transition to a logic low state to indicate that high side switch 351 should be turned off.

As explained with regard to **FIG. 2,** but not shown in **FIG. 3,** circuitry may be incorporated in primary control block 355 to implement a deadtime between the turn off of low side switch 353 and the turn on of high side switch 351.

In the example high side control block 365, both the output of Volt-sec on-time block 335 and Proportional on-time block 340 should transition to a low state for the output of OR gate 327 to transition low and command the turn off the high side switch 351. Accordingly, whichever block indicates a longer on-time for high side switch 351 will control the duration of the high side switch on-time in a given cycle.

Further, if either the output of Max on-time block 345 or OR gate 327 transition low, the output of AND gate 328 will transition low, commanding turn off of high side switch 351. In other words, if the output of Max on-time block 345 indicates that the maximum on-time has expired, the high side switch 351 will be commanded to turn off, regardless of the state of the outputs either Volt-sec on-time block 335 or Proportional on-time block 340.

Although the example high side control block 365 implements a specific logic for combining the output of its individual sub-blocks, as will be understood by those of skill in the art, other example combinations are possible consistent with the teaching of the present disclosure. Implementing the maximum on-time, proportional on-time and volt-second on-time in combination, in some examples, may provide more robust operation over a wide range of potential operating conditions of the AHB power converter.

The output of AND gate 328 is input to the Link to High Side block 329. This block provides for the necessary level shifting of a high side control signal to be communicated through communication path 357. The high side control signal will control the turn on and turn off of high side switch 351. Because high side switch 351 will be referenced to a different voltage domain (i.e., will be coupled between the high voltage input and the half-bridge node of an AHB power converter) compared to low side switch 353, the control signal from the primary controller to the high side switch may be level shifted accordingly.

Link to High Side block 329 also communicates with DCM Detection block 321 to ensure the proper deadtime between switching of low side switch 353 and switching of the high side switch 351. The DCM detection starts after the volt*sec balanced is reached in each switching cycle. The low side is allowed to turn on after DCM detection is complete.

Primary controller 350 includes a HS Receiver and Driver Logic block 358 configured for receiving the high side control signal through communication path 357. HS Receiver and Driver Logic block 358 receives the high side control signal and responsively generates signals to high side driver 352 for controlling the operation of high side switch 351. Although not shown, HS Receiver and Driver Logic block 358 may incorporate other inputs to implement additional features and functions. For example, HS Receiver and Driver Logic block 358 may be configured to receive signals to sense temperature and/or to sense the high side bias voltage and to implement fault management modes in response thereto. As will be understood by those of skill in the art, other example features and functions are possible to be implemented by HS Receiver and Driver Logic block 358 consistent with the teaching of the present disclosure.

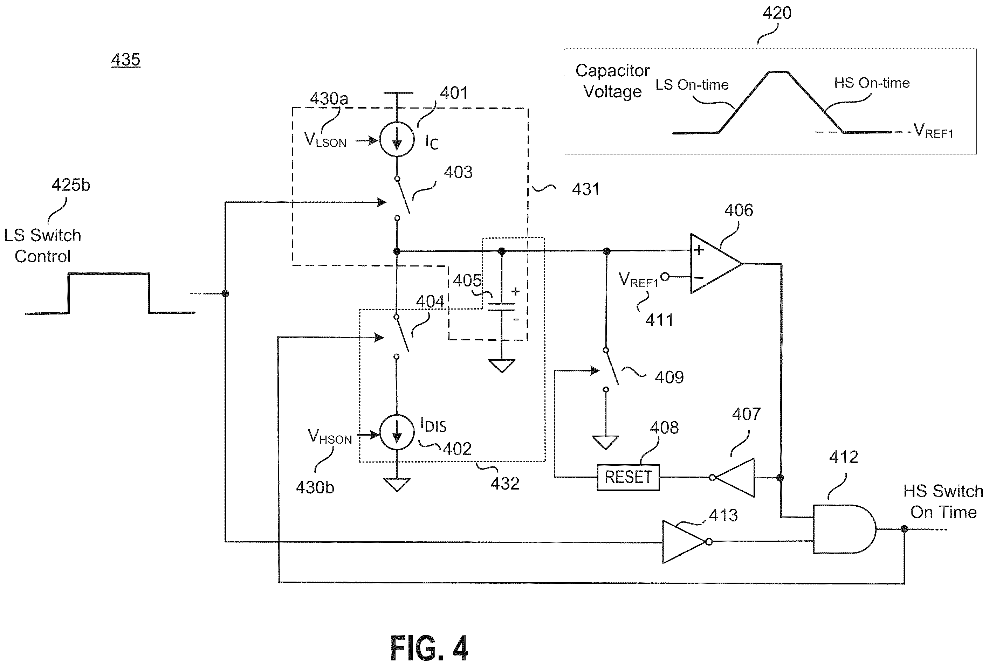

**FIG. 4** shows a simplified circuit diagram for an example Volt-sec on-time block 435 that corresponds to Volt-sec on-time block 335 in the example primary controller 350 of **FIG. 3.** Volt-sec on-time block 435 comprises a first current source 401 for providing charge current Ic, a first switch 403 and a capacitor 405. First current source 401, first switch 403 and capacitor 405 collectively comprise a first integrator 431.

First current source 401 is configured to receive a signal $V_{LSON}$ 430a, which is representative of the voltage on a primary winding, such as, for example auxiliary winding 106 shown in **FIG. 1.** In one example, $V_{LSON}$ may be derived from the signal at an AUX input 130 as shown in **FIG. 1.** $V_{LSON}$ 430a is representative of the voltage on a primary winding when the low side switch is ON. Charge current Ic will be proportional to $V_{LSON}$ 430a.

Volt-sec on-time block 435 further comprises a second current source 402 for providing a discharge current $I_{DIS}$, and a second switch 404. Second current source 402, second switch 404 and capacitor 405 collectively comprise a second integrator 432.

Second current source 402 is configured to receive a signal $V_{HSON}$ 430b, which is representative of the voltage on a primary winding, such as, for example auxiliary winding 106 shown in **FIG. 1.** In one example, $V_{HSON}$ may be derived from the signal at an AUX input 130 as shown in **FIG. 1.** $V_{HSON}$ 430b is representative of the voltage on a primary winding when the high side switch is ON. Discharge current $I_{DIS}$ will be proportional to $V_{HSON}$ 430b.

Volt-sec on-time block 435 further comprises a comparator 406 configured to compare the voltage across capacitor 405 with a reference voltage $V_{REF1}$ 411. Although the example of **FIG. 4** illustrates comparator 406 as a voltage comparator, as will be understood by those skilled in the art, other examples of comparator, analog and/or digital, may be used consistent with the teaching of the present disclosure. Capacitor 405 is coupled to the non-inverting input of comparator 406 while the reference voltage $V_{REF1}$ 411 is coupled to the inverting input of comparator 406. The reference voltage $V_{REF1}$ 411 is a small offset from ground, so the comparator 406 output will be logic 0 when the capacitor 405 is reset. The offset in $V_{REF1}$ 411 helps to provide stability in the operation of comparator 405.

Volt-sec on-time block 435 further comprises a third switch 409, configured to reset the voltage across capacitor 405 each switching cycle. Volt-sec on-time block 435 further comprises an inverter 407 and reset circuit 408 coupled between the output of comparator 406 and third switch 409. Reset circuit 408 is configured to implement a reset pulse between the changing of the output state of comparator 406 and the switching of third switch 409 to implement reset of capacitor 405.

The output of comparator 406 is further coupled to one input of AND gate 412. Volt-sec on-time block 435 further comprises an input for receiving a low side (LS) switch control signal 425b, representative of the timing of the turn on and turn off of a low side switch of an AHB power converter such as, for example, low side switch 353 of the example primary controller 350 of **FIG. 3.** LS switch control signal 425b is coupled to control first switch 403 such that first switch 403 is on when the low side switch is on and is off when the low side switch is off. LS switch control signal 425b is further coupled to an inverter 413. The output of inverter 413 is coupled to a second input of AND gate 412. The output of AND gate 412 is the HS switch ON time signal and is coupled to control second switch 404 and is further coupled as an output of Volt-sec on-time block 435.

Waveform 420 illustrates the voltage across capacitor 405 during an example switching cycle, as will be explained more below.

In an example switching cycle of an AHB power converter, Volt-sec on-time block 435 may operate as follows. At the initiation of a switching cycle, LS Switch control signal 425b changes state (e.g., from low to high as in the illustrated example) indicating that the low side switch has turned on. The output of AND gate 412 is at a low value when the LS switch control signal 425b is a high value.

First switch 403 is configured to turn on in response to the LS Switch control signal 425b, and capacitor 405 is configured to begin charging. The rate at which capacitor 405 charges is dependent on the value of $V_{LSON}$ 430a. During the on-time of the low side switch, the voltage on capacitor 405 will ramp up as illustrated in waveform 420. The voltage on capacitor 405 is greater than reference voltage $V_{REF1}$ 411 and the output of comparator 406 is a high value.

At the end of the low side switch on-time, LS Switch control signal 425b changes state (e.g., from high to low as in the illustrated example) and first switch 403 is configured to turn off in response, which stops the charging of capacitor 405. After LS Switch control signal 425b transitions, indicating the end of the low side switch on-time, the output of AND gate 412 transitions high, indicating the start of the high side switch on-time. The output of AND gate 412 going high turns on second switch 404. As explained previously in the discussion of **FIG. 2,** a deadtime may be implemented between the end of the low side switch on-time and the start of the high side switch on-time.

When second switch 404 is turned on, the second current source 402 discharges the capacitor 405. The rate at which capacitor 405 discharges is dependent on the value of $V_{HSON}$ 430a. During the on-time of the high side switch, the voltage on capacitor 405 will ramp down as illustrated in waveform 420. When the voltage on capacitor 405 falls below the threshold set by $V_{REF1}$ 411, the output of comparator 406 will change state (e.g., go from high to low as in the illustrated example) and, accordingly, the output of AND gate 412 will also go low. The output of AND gate 412 is output from Volt-sec on-time block 435 to control turn off of the high side switch.

When the output of AND gate 412 changes state, second switch 404 will be turned off. Also, when the output of comparator 406 changes state (e.g., goes from high to low in the illustrated example), after a reset implemented by reset circuit 408, third switch 409 will be turned on, resetting the voltage across capacitor 405 and making Volt-sec on-time block 435 ready for the next switching cycle.

Although **FIG. 4** illustrates a particular example of the logic for controlling the first and second integrator 431, 432 and for the input and output signals, as will be understood by those of skill in the art, other configurations are possible consistent with the teaching of the present disclosure. And while **FIG. 4** illustrates a particular example circuit structure for integrating the value of an input signal over time, as will be understood by those of skill in the art, other structures, analog and/or digital, are possible consistent with the teaching of the present disclosure.

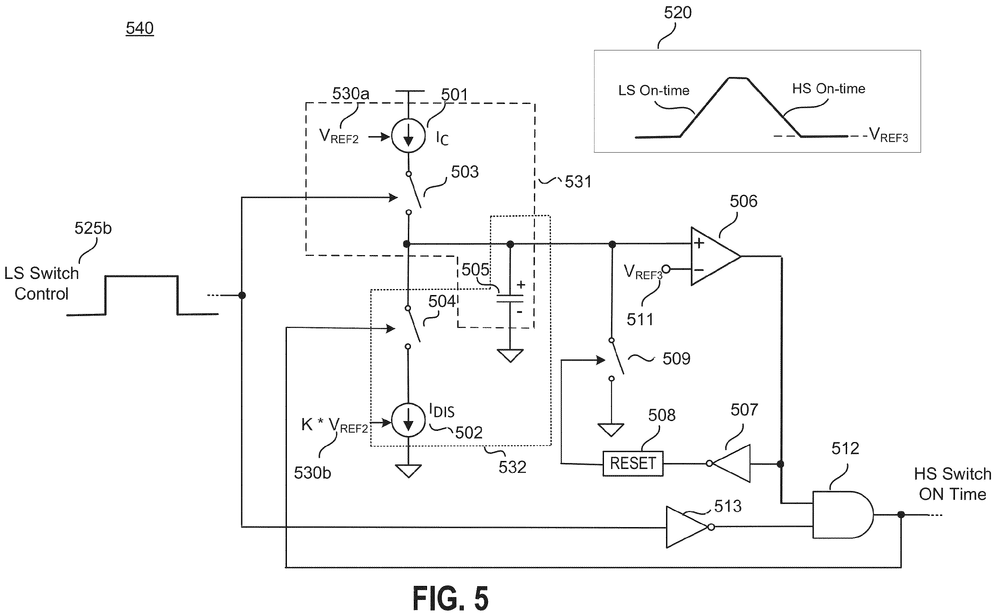

**FIG 5** shows a simplified circuit diagram for an example Proportional on-time block 540 that, in one example, may correspond to block 340 in the example primary controller 350 of **FIG. 3.** The example Proportional on-time block 540 is substantially identical to Volt-sec on-time block 435 of **FIG. 4,** and operates in substantially the same manner, with at least the difference discussed below.

In Proportional on-time block 540, the input to first current source 501, is a first reference voltage, $V_{REF2}$ 530a and the input to second current source 502 is a second reference voltage $K * V_{REF2}$ 530b. Accordingly, rather than being responsive to a sensed auxiliary winding voltage, Proportional on-time block 540 is configured to control the on-time of the high side switch 151 to be proportional to the on-time of the low side switch 153, based on the scaling factor K.

In Proportional on-time block 540, a first integrator 531 is configured to integrate the value of $V_{REF2}$ 530a during the on-time of the low side switch. A second integrator 532 will integrate the value of $K * V_{REF2}$ 530b during the on-time of the high side switch 151. When these integrated values substantially equal one another, the output of the comparator 506 will change state and indicate the high side switch should be turned off.

In detail, the operation of Proportional on-time block 540 tracks that of Volt-sec on-time block 435 as explained above with reference to **FIG. 4.** In one example, the value of K may be equal to 1, thus controlling the on-time of the high side switch to be substantially the same as the on-time of the low side switch. In other examples, other values of K are possible.

Ideally the value of K is equal to 1. Because of potential mismatching of the charging and discharging circuit, in some examples the value of K could be 0.95, 1.05 or some other value close to 1, to compensate for noise or mismatching in the circuit implementation. In some examples, the value of K can be a trimmable or programmable parameter.

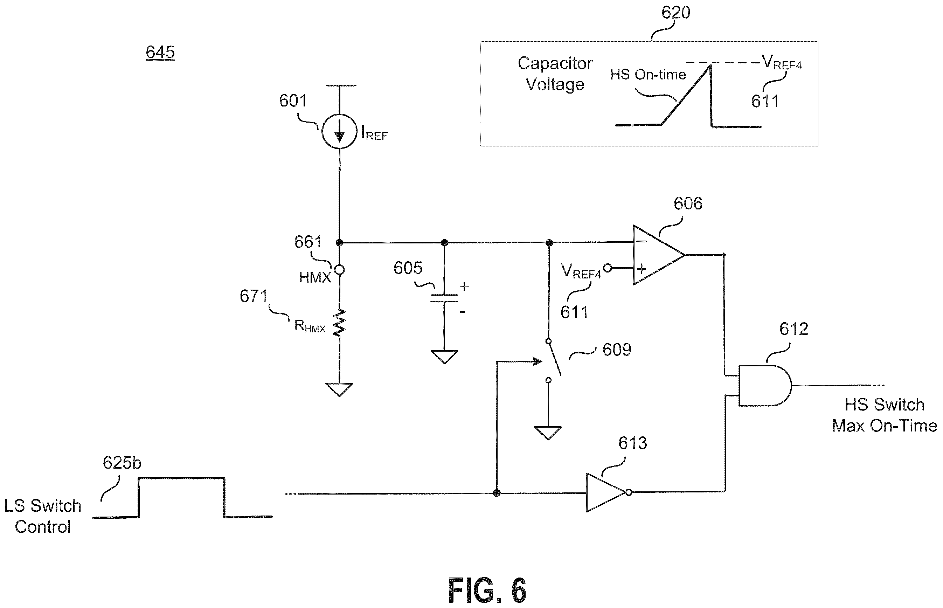

**FIG. 6** shows a simplified circuit diagram for an example Max on-time block 645 that, in one example, may correspond to block 345 in the example primary controller 350 of **FIG. 3.** Max on-time block 645 comprises a reference current source 601 for providing reference current $I_{REF}$, a capacitor 605 and a comparator 606. Reference current source 601, capacitor 605 and comparator 606 collectively comprise a timer. Max on-time block 645 further comprises a reference voltage $V_{REF4}$ 611 input to comparator 606. Reference voltage $V_{REF4}$ 611 is coupled to the non-inverting input of comparator 606 while capacitor 605 is coupled to the inverting input of comparator 606.

Max on-time block 645 further comprises a terminal HMX 661 configured to be coupled to an external resistor $R_{HMX}$ 671 for programming the duration of the maximum high side switch on-time. Terminal HMX 661 may correspond to terminal HMX 161 and resistor $R_{HMX}$ 671 may correspond to resistor $R_{HMX}$ 171 of the example illustrated in **FIG. 1.**

Max on-time block 645 further comprises a switch 609 for resetting the voltage on capacitor 605 during each switching cycle. Max on-time block 645 further comprises an input for receiving a LS switch control signal 625b, representative of the timing of the turn on and turn off of a low side switch of an AHB power converter such as, for example, low side switch 353 of the example primary controller 350 of **FIG. 3.** LS switch control signal 625b is also one example of the LS switch control signal 325b discussed with respect to **FIG. 3.** LS switch control signal 625b is coupled to control switch 609 such that switch 609 is on when the low side switch 153 is on and is off when the low side switch 153 is off.

Inverter 613 is coupled to receive the LS switch control signal and the output of inverter 613 is coupled to one input of AND gate 612. The output of comparator 606 is coupled to a second input of AND gate 612 and the output of AND gate 612 is coupled to provide the high side switch maximum on-time signal as an output of Max on-time block 645.

In an example switching cycle of an AHB power converter, Max on-time block 645 may operate as follows. At the initiation of a switching cycle, LS Switch control signal 625b will change state *(e.g.,* from low to high as in the illustrated example) indicating that the low side switch 151 has turned on. Switch 609 is turned on in response to the LS Switch control signal 625b, resetting the voltage across capacitor 605 to a low state and the output of comparator 606 to a high state. In the example shown, the voltage across capacitor 605 is reset to primary ground. When the LS Switch control signal 625b is in the high state, the output of inverter 613 is a low state, and the output of AND gate 612 is also low.

At the end of the low side switch on-time, LS Switch control signal 625b changes state (e.g., from high to low as in the illustrated example) indicating that the low side switch 153 has turned off. The switch 609 is turned off in response to the LS Switch control signal 625b, allowing current source 601 to charge capacitor 605. When the LS Switch control signal 625b is in the low state, the output of inverter 613 is high. The output of AND gate 612 transitions to a high state, indicating the beginning of the maximum high side on-time.

The voltage on capacitor 605 will ramp up as illustrated in waveform 620. When the voltage on capacitor 605 crosses $V_{REF4}$ 611, the output of comparator 606 will go low, and the output of AND gate 612 will therefore also go low, indicating the expiration of the maximum on-time for the high side switch.

In the disclosed example of **FIG. 6,** $I_{REF}$ and $V_{REF4}$ 611 have fixed values, so the time it takes for capacitor 605 to charge to the reference voltage $V_{REF4}$ 611 is dependent on the value of external resistor $R_{HMX}$ 671 coupled to terminal HMX 661. In this manner, the maximum on-time for the high side switch may be programmed by the selection of the value of resistor $R_{HMX}$ 671.

Although **FIG. 6** illustrates a particular example of the circuit structure and logic for controlling the timer and for the input and output signals, as will be understood by those of skill in the art, other structures and configurations, analog and or digital, are possible consistent with the teaching of the present disclosure.

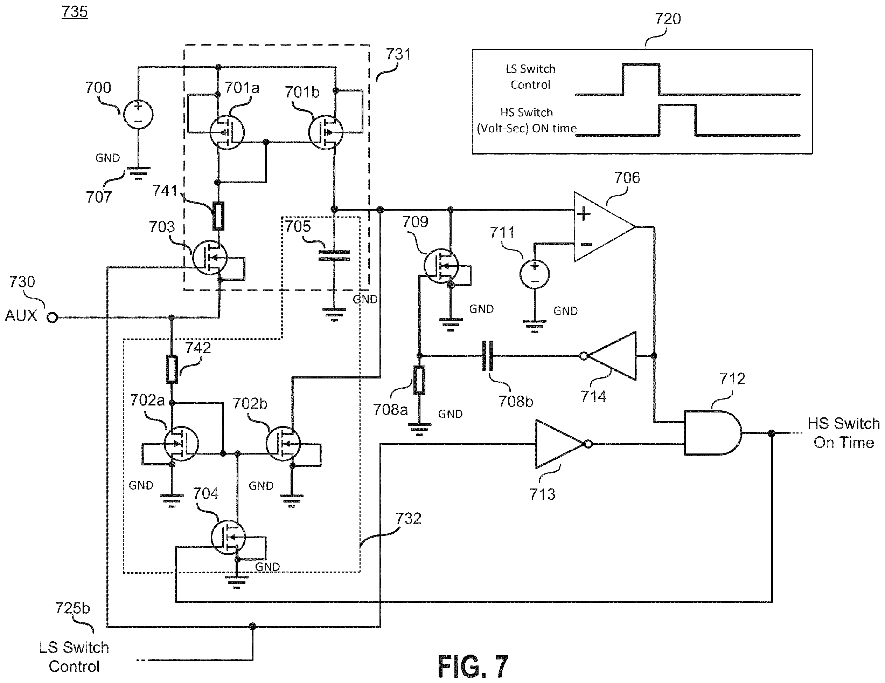

**FIG. 7** shows a circuit diagram for a Volt-sec on-time block 735 that, in one example, may correspond to volt-sec on-time block 335 of the Primary controller 350 of **FIG. 3** and/or the Volt-sec on-time block 435 shown in **FIG. 4.**

Volt-sec on-time block 735 comprises a first reference voltage 700, a first transistor 701a, a second transistor 701b and a first resistor 741. First transistor 701a, second transistor 701b and first resistor 741 collectively comprise a first current source for charging a first capacitor 705. Volt-sec on-time block 735 further comprises a third transistor 702a, a fourth transistor 702b, a second resistor 742 and a ground reference 707. Third transistor 702a, fourth transistor 702b and second resistor 742 collectively comprise a second current source for discharging first capacitor 705. Volt-sec on-time block 735 further comprises a fifth transistor 703 for controlling the charging of first capacitor 705 and a sixth transistor 704 for controlling the discharge of first capacitor 705.

First transistor 701a, second transistor 701b, first resistor 741, fifth transistor 703 and first capacitor 705 collectively comprise a first integrator 731. Third transistor 702a, fourth transistor 702b, second resistor 742, sixth transistor 704 and first capacitor 705 collectively comprise a second integrator 732. Fifth transistor 703 and second resistor 742 are coupled to a terminal AUX 730 configured to receive a signal which is representative of the voltage on a primary winding of an AHB power converter, such as, for example auxiliary winding 106 shown in **FIG. 1.**

Volt-sec on-time block 735 further comprises a comparator 706 configured to compare the voltage across first capacitor 705 with a second reference voltage 711. Although the example of **FIG. 7** illustrates comparator 706 as a voltage comparator, as will be understood by those skilled in the art, other examples of comparators, analog and/or digital, may be used consistent with the teaching of the present disclosure.

Volt-sec on-time block 735 further comprises a seventh transistor 709, configured to reset the voltage across first capacitor 705 each switching cycle. Volt-sec on-time block 735 further comprises a first inverter 714 and a second capacitor 708b coupled between the output of comparator 706 and seventh transistor 709. Volt-sec on-time block 725 also comprises a third resistor 708a coupled to the seventh transistor 709. Resistor 708a and capacitor 708b collectively comprise a reset circuit that is configured to implement a reset pulse between the changing of the output state of comparator 706 and the switching of seventh transistor 709 to implement the reset of first capacitor 705.

Volt-sec on-time block 735 further comprises an AND gate 712 configured to provide an output for controlling the on-time of a high side switch of an AHB power converter, such as for example, high side switch 351 of **FIG. 3** and high side switch 151 of **FIG. 1** in accordance with the teaching of the present disclosure. A first input of AND gate 712 is coupled to the output of comparator 706.

Volt-sec on-time block 735 further comprises an input for receiving a LS switch control signal 725b, representative of the timing of the turn on and turn off of a low side switch of an AHB power converter such as, for example, low side switch 353 of the example primary controller 350 of **FIG. 3** and low side switch 153 of the primary controller 150 of **FIG. 1.** LS switch control signal 725b is coupled to control fifth transistor 703 such that fifth transistor 703 is on when the low side switch is on and is off when the low side switch is off. LS switch control signal 725b is further coupled to a second inverter 713, the output of which is coupled to a second input of AND gate 712. The output of AND gate 712 is coupled as an output of Volt-sec on-time block 735 and is also coupled to the input of sixth transistor 704 to control the operation of the second integrator. The output of AND gate 712 is the HS switch on-time signal.

Block 720 illustrates one example of the relative timing between LS switch control signal 725b and the output of AND gate 712.

In an example switching cycle of an AHB power converter, Volt-sec on-time block 735 may operate as follows. At the initiation of a switching cycle, LS Switch control signal 725b changes state *(e.g.,* from low to high as in the illustrated example) indicating that the low side switch has turned on. The output of AND gate 712 is at a low value when the LS switch control signal 725b is a high value. Fifth transistor 703 is configured to turn on in response to the LS Switch control signal 725b, and first capacitor 705 is configured to begin charging. The rate at which first capacitor 705 charges is dependent on the value of the input at terminal AUX 730. During the on-time of the low side switch, the voltage on first capacitor 705 will ramp up from a low value to a higher value. The voltage on first capacitor 705 is greater than second reference voltage 711 and the output of comparator 706 is a high value.

At the end of the low side switch on-time, LS Switch control signal 725b changes state (e.g., from high to low as in the illustrated example) and the fifth transistor 703 is configured to turn off in response, which stops the charging of first capacitor 705. After LS Switch control signal 725b transitions, indicating the end of the low side switch on-time, the output of AND gate 712 transitions high, indicating the start of the high side switch on-time. The output of AND gate 712 going high turns on sixth transistor 704. As explained previously in the discussion of FIG. 2, a deadtime may be implemented between the end of the low side switch on-time and the start of the high side switch on-time.

When sixth transistor 704 is turned on, the voltage on first capacitor 705 will begin discharging. The rate at which first capacitor 705 discharges is dependent on the value of the signal at terminal AUX 730. During the on-time of the high side switch, the voltage on first capacitor 705 will ramp down. When the voltage on first capacitor 705 falls below the threshold set by second reference voltage 711, the output of comparator 706 will change state *(e.g.,* go from high to low as in the illustrated example) and, accordingly, the output of AND gate 712 will also go low. The output of AND gate 712 is output from Volt-sec on-time block 735 to control turn off of the high side switch.

When the output of AND gate 712 changes state, sixth transistor 704 will be turned off. Also, when the output of comparator 706 changes state (e.g., goes from high to low in the illustrated example), after a reset circuit implemented by third resistor 708a and second capacitor 708b, seventh transistor 709 will be turned on, resetting the voltage across first capacitor 705 and making Volt-sec on-time block 735 ready for the next switching cycle.

Although **FIG. 7** illustrates a particular example of the logic for controlling the first and second integrator 731, 732 and for the input and output signals, as will be understood by those of skill in the art, other configurations are possible consistent with the teaching of the present disclosure. And while **FIG. 7** illustrates a particular example circuit structure for integrating the value of an input signal over time, as will be understood by those of skill in the art, other structures, analog and/or digital, are possible consistent with the teaching of the present disclosure.

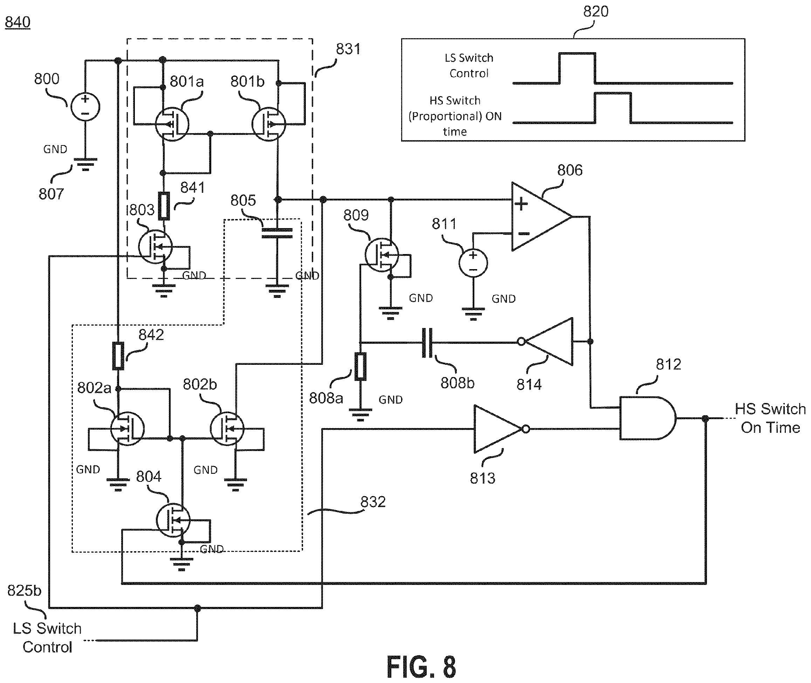

**FIG 8** shows a circuit diagram for an example Proportional on-time block 840 that, in one example, may correspond to block 340 in the example primary controller 350 of **FIG. 3** and/or the Proportional on-time block 540 shown in **FIG. 5.** The example Proportional on-time block 840 is substantially identical to Volt-sec on-time block 735 of **FIG. 7,** and operates in substantially the same manner, with at least one difference as discussed below.

In Proportional on-time block 840, fifth transistor 803 is coupled to ground reference 807 rather than to an external terminal. Further, second resistor 842 is coupled to voltage reference 800 rather than to an external terminal. Accordingly, rather than being responsive to a sensed auxiliary winding voltage, Proportional on-time block is configured to control the high side switch on-time to be proportional to the on-time of the low side switch, based on the scaling factor K. Scaling factor K is determined based on the ratio of the values of first resistor 841 and second resistor 842.

In Proportional on-time block 840, a first integrator 831 will integrate the value of voltage reference 800 divided by the value of first resistor 841 during the on-time of the low side switch. A second integrator 832 will integrate the value of voltage reference 800 divided by the value of second resistor 842 during the on-time of the high side switch. When these integrated values equal one another, the output of the comparator 806 will change state and indicate the high side switch should be turned off.

In detail, the operation of Proportional on-time block 840 tracks that of Volt-sec on-time block 735 as explained above with reference to **FIG. 7,** and reference numerals are similarly numbered accordingly.

In one example, the value of K may be equal to 1, thus controlling the on-time of the high side switch to be substantially the same as the on-time of the low side switch. In other examples, other values of K are possible. Ideally the value of K is equal to 1. Because of potential mismatching of the charging and discharging circuit, in some examples the value of K could be 0.95, 1.05 or some other value close to 1, to compensate for noise or mismatching in the circuit implementation. In some examples, the value of K can be a trimmable or programmable parameter.

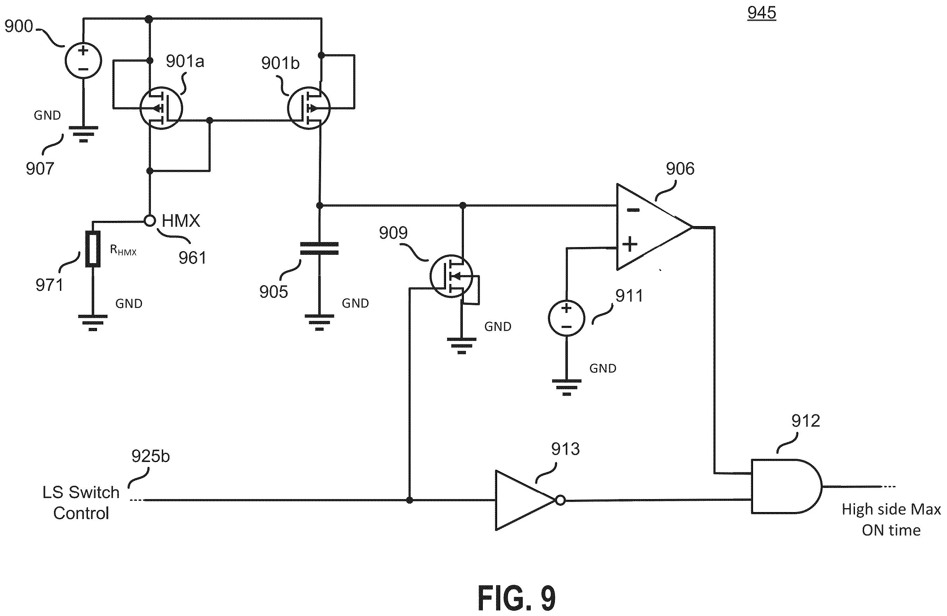

**FIG. 9** shows a circuit diagram for an example Max on-time block 945 that, in one example, may correspond to block 345 in the example primary controller 350 of **FIG. 3** and/or Max on-time block 645 of **FIG. 6.**

Max on-time block 945 comprises a first reference voltage source 900, a first transistor 901a, a second transistor 901b, a capacitor 905 and a comparator 906. First reference voltage source 900, first transistor 901a, second transistor 901b, capacitor 905 and comparator 906 collectively comprise a timer. Max on-time block 945 further comprises a second reference voltage 911 input to comparator 906. Second reference voltage 911 is coupled to the non-inverting input of comparator 906 while capacitor 905 is coupled to the inverting input of comparator 906.

Max on-time block 945 further comprises a terminal HMX 961 configured to be coupled to an external resistor $R_{HMX}$ 971 for programming the duration of the maximum high side switch on-time. Terminal HMX 961 may correspond to terminal HMX 161 and resistor $R_{HMX}$ 971 may correspond to resistor $R_{HMX}$ 171 of the example illustrated in **FIG. 1.** Max on-time block 945 further comprises a switch 909 for resetting the voltage on capacitor 905 during each switching cycle.

Max on-time block 945 further comprises an input for receiving a LS switch control signal 925b, representative of the timing of the turn on and turn off of a low side switch of an AHB power converter such as, for example, low side switch 353 of the example primary controller 350 of **FIG. 3** and low side switch 153 of primary controller 150 of **FIG. 1.** LS switch control signal 925b is coupled to control switch 909 such that switch 909 is on when the low side switch is on and is off when the low side switch is off. LS switch control signal 925b is coupled to inverter 913 and the output of inverter 913 is coupled to one input of AND gate 912. The output of comparator 906 is coupled to a second input of AND gate 912 and the output of AND gate 912 is coupled to provide the high side switch maximum on-time signal as an output to Max on-time block 945.

In an example switching cycle of an AHB power converter, Max on-time block 945 may operate as follow. At the initiation of a switching cycle, LS Switch control signal 925b will change state *(e.g.,* from low to high as in the illustrated example) indicating that the low side switch has turned on. LS Switch control signal 925b will turn on switch 909, resetting the voltage across capacitor 905 to a low state. The low state is less than the voltage reference 911 and the output of comparator 906 will be high. The output of inverter 913 will be low, so the output of AND gate 912 will also be low.

At the end of the low side switch on-time, LS Switch control signal 925b will change state (e.g., from high to low as in the illustrated example) indicating that the low side switch has turned off. LS Switch control signal 925b going low will turn off switch 909, allowing capacitor 905 to begin charging. The voltage across capacitor 905 is less than second reference voltage 911 and the output of comparator 606 is high. The output of inverter 913 will be high, so the output of AND gate 912 will also transition to a high state, indicating the beginning of the maximum high side on-time.

The voltage on capacitor 905 will ramp up from a low level to a higher level. When the voltage on capacitor 905 reaches second reference voltage 911, the output of comparator 906 will go low, and the output of AND gate 912 will therefore also go low, indicating the expiration of the maximum on-time for the high side switch.

In the disclosed example of **FIG. 9,** first reference voltage 900 and second reference voltage 911 have fixed values, so the rate at which the capacitor 905 charges and the time it takes for capacitor 905 to charge to the second reference voltage 911 is dependent on the value of external resistor $R_{HMX}$ 971 coupled to terminal HMX 961. In this manner, the maximum on-time for the high side switch may be programmed by the selection of the value of resistor $R_{HMX}$ 971.

Although **FIG. 9** illustrates a particular example of the circuit structure and logic for controlling the operation of Max on-time block 945 and for the input and output signals, as will be understood by those of skill in the art, other structures and configurations, analog and or digital, are possible consistent with the teaching of the present disclosure.

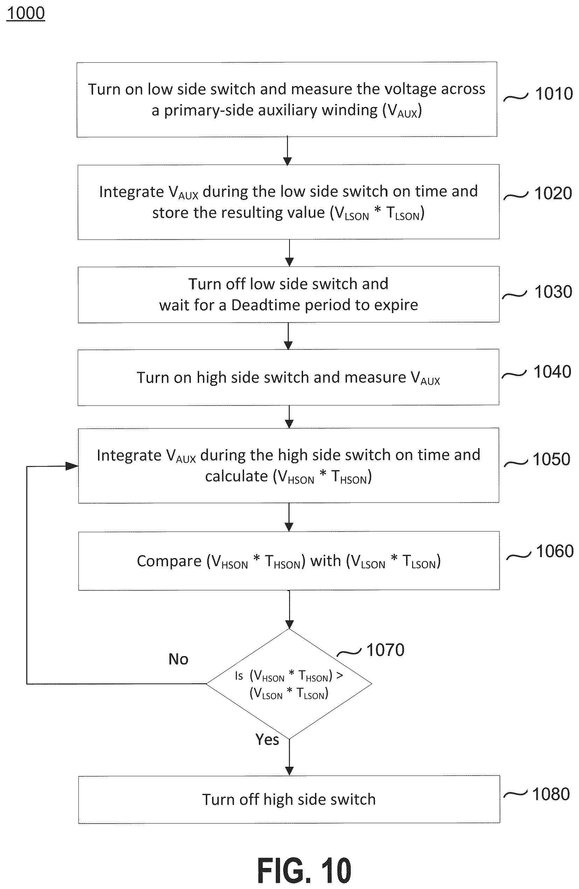

**FIG. 10** shows a series of steps in an example method 1000 for controlling the on-time a high side switch of an AHB power converter using a volt-second calculation.

In step 1010, a low side switch of an AHB power converter, for example low side switch 153 shown in **FIG. 1,** is turned on and the voltage across a primary side auxiliary winding (VAUX), for example winding 106 as shown in **FIG. 1** is measured. In step 1020, the measured VAUX is integrated during the low side switch on-time and the resulting first integrated value ($V_{LSON} * T_{LSON}$) is stored. In step 1030, the low side switch is turned off and a deadtime period is allowed to elapse.

In step 1040, a high side switch of an AHB power converter, for example high side switch 151 shown in **FIG. 1,** is turned on and the voltage the auxiliary winding (VAUX) is again measured. In step 1050, the measured VAUX is integrated during the high side switch on-time and the second integrated value ($V_{HSON} * T_{HSON}$) is calculated.

In step 1060, ($V_{HSON} * T_{HSON}$) is compared with ($V_{LSON} * T_{LSON}$). In step 1070, the result of the comparison is evaluated. If ($V_{LSON} * T_{LSON}$) is less than or equal to ($V_{HSON} * T_{HSON}$) the method returns to step 1050 and the integration of VAUX continues. If ($V_{LSON} * T_{LSON}$) is greater than ($V_{HSON} * T_{HSON}$), in other words, when ($V_{HSON} * T_{HSON}$) exceeds ($V_{LSON} * T_{LSON}$), method 1000 proceeds to step 1080. In step 1080, the high side switch is turned off.

In this manner, the on-time of the high side switch is controlled based on the volt-second balance between the operation of the AHB power converter during the on-time of the low side switch and during the on-time of the high-side switch.

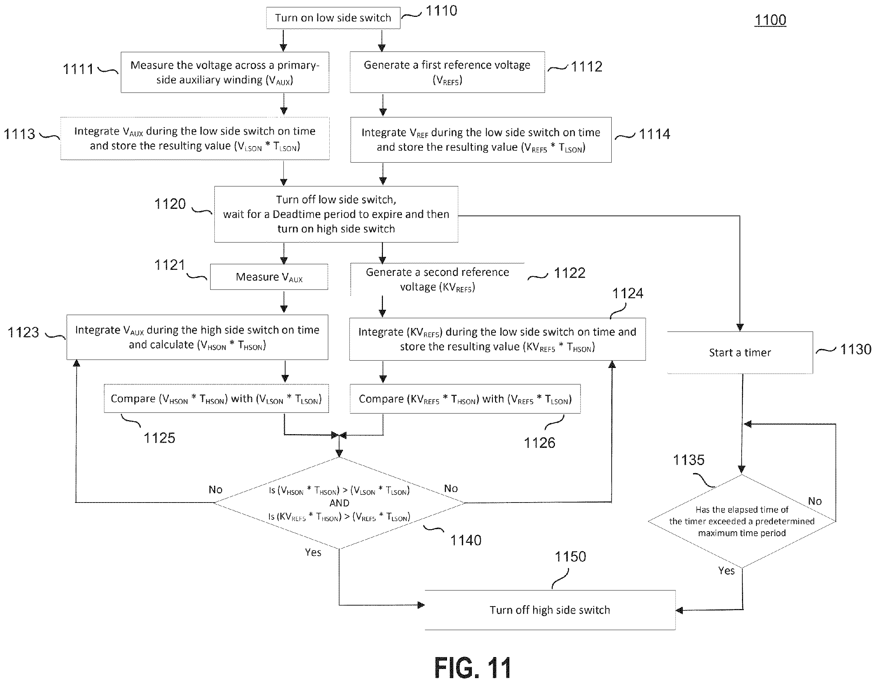

**FIG. 11** shows a flow diagram for a method 1100 for controlling the on-time of a high side switch of an AHB power converter using three different optional techniques in parallel; a volt-second on-time, a proportional on-time and a maximum on-time.

In step 1110, a low side switch of an AHB power converter, for example low side switch 153 shown in FIG. 1, is turned on. Following step 1110, method 1100 branches into two branches. In step 1111 the voltage across a primary side auxiliary winding (VAUX), for example winding 106 as shown in **FIG. 1,** is measured. Substantially simultaneously with step 1111, in step 1112 a first reference voltage ($V_{REF5}$) is generated.

In step 1113, the measured VAUX is integrated during the low side switch on-time and the resulting first integrated value ($V_{LSON}$ * $T_{LSON}$) is stored. Substantially simultaneously with step 1113, in step 1114, $V_{REF5}$ is integrated during the low side switch on-time and the resulting third integrated value ($V_{REF5}$ * $T_{LSON}$) is stored.

In step 1120, the low side switch is turned off and a deadtime period is allowed to elapse. Thereafter a high side switch of an AHB power converter, for example high side switch 151 shown in **FIG. 1,** is turned on.

In step 1121, the voltage the auxiliary winding (VAUX) is again measured. Substantially simultaneously with step 1121, in step 1122, a second reference voltage ($KV_{REF5}$) is generated. Also substantially simultaneously with steps 1121 and 1122, in step 1130, a timer is started.

In step 1123, the measured VAUX is integrated during the high side switch on-time and the second integrated value ($V_{HSON}$ * $T_{HSON}$) is calculated. Substantially simultaneously with step 1123, in step 1124, $KV_{REF5}$ is integrated during the low side switch on-time and the resulting fourth integrated value ($KV_{REF5}$ * $T_{HSON}$) is calculated. In step 1125, ($V_{HSON}$ * $T_{HSON}$) is compared with ($V_{LSON}$ * $T_{LSON}$) and in step 1126, ($KV_{REF5}$ * $T_{HSON}$) is compared with ($V_{REF5}$ * $T_{LSON}$).

In step 1135, the elapsed time of the timer is compared to a predetermined maximum time period. If the maximum time period has not been exceeded, the timer continues to run and the method repeats step 1135. If at any time the elapsed time of the timer exceeds the predetermined maximum time period, method 1100 immediately proceeds to step 1150 and the high side switch is turned off.

In step 1140, if the maximum time period has not been reached, the results of the comparisons of steps 1125 and 1126 are evaluated. If both ($V_{HSON}$ * $T_{HSON}$) is greater than ($V_{LSON}$ * $T_{LSON}$) and ($KV_{REF5}$ * $T_{HSON}$) is greater than ($V_{REF5}$ * $T_{LSON}$), method 1100 proceeds to step 1150 and the high side switch is turned off. If either ($V_{HSON}$ * $T_{HSON}$) is less than or equal to ($V_{LSON}$ * $T_{LSON}$) or ($KV_{REF5}$ * $T_{HSON}$) is less than or equal to ($V_{REF5}$ * $T_{LSON}$) method 1100 returns to step 1123 or 1124, respectively. In this manner, it is the longer of the time periods determined by the volt-second on-time or the proportional on-time (if both are shorter than the maximum time period) that will control the turn off of the high-side switch in any given switching cycle.

Implementing the maximum on-time, proportional on-time and volt-second on-time in combination, in some examples, may provide more robust operation over a wide range of potential operating conditions of the AHB power converter. Furthermore, as one of skill in the art may appreciate, there may be alternative ways to implement the various circuit blocks and circuitry described herein.

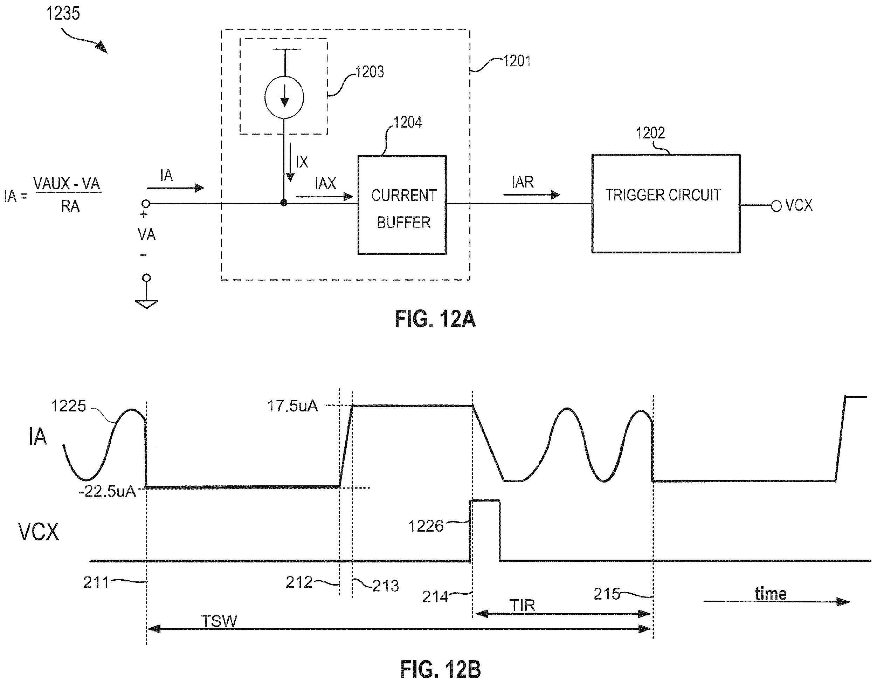

For instance, **FIG. 12A** illustrates a voltage-second (volt-sec) on-time circuit 1235 according to another embodiment of the present disclosure. Volt-sec on-time circuit 1235 may be an alternative realization of volt-sec on time block 335; however, unlike the previously described circuit realizations, volt-sec on time circuit 1235 may avail a stable or fixed input bias voltage VA having a regulated value greater than or equal to zero volts. For instance, bias voltage VA may be two point five volts (2.5V).

Volt-sec on-time circuit 1235 includes buffer circuit 1201 and trigger circuit 1202. In addition to providing bias voltage VA, buffer circuit 1201 may receive an external resistor current IA and provide a buffered current IAR. With reference to FIG. 1, the resistor current IA may be related to the resistance RA of resistor 175 and the resistor voltage VRES according to Ohm's law; thus, resistor current IA may be expressed in terms of the auxiliary winding voltage VAUX and bias voltage VA by equation EQ. 1.

$$IA = \frac{VRES}{RA} = \frac{VAUX - VA}{RA} \qquad \text{EQ. 1}$$

Buffer circuit 1201 includes an offset correction circuit 1203 and current buffer 1204. Offset correction circuit 1203 may provide an offset current IX to adjust input current IAX relative to resistor current IA. For instance, if offset current IX equals bias voltage VA divided by resistance RA, then input current IAX may be given by equation EQ. 2.

$$IAX = \frac{VAUX}{RA} \qquad \text{EQ. 2}$$

Current buffer 1204 may receive input current IAX and provide a buffered current IAR to trigger circuit 1202. Buffered current IAR may be proportional to input current IAX. For instance, buffered current IAR may be a replica of input current IAX but with opposite sign as in equation EQ. 3.

$$IAR = -IAX \qquad\qquad EQ. 3$$

According to the teachings herein, volt-sec on-time circuit 1235 may receive resistor current IA and in response provide a state voltage VCX indicating when to turn off high-side switch 151. For instance, trigger circuit 1202 may receive buffered current IAR and transition state voltage VCX to indicate when to turn off high-side switch 151.

FIG. 12B illustrates a waveform 1225 of resistor current IA and waveform 1226 of state voltage VCX according to an embodiment of the present disclosure. With reference to FIG. 2 and in accordance with equation EQ. 1, waveform 1225 may be like that of the auxiliary winding voltage VAUX exhibiting transitions over a switching period TSW from time 211 to time 215. During the switching period TSW the low-side switch 153 is on from time 211 to time 212; and the high-side switch 151 is on from time 213 to time 214. During period TIR from time 214 to time 215, both the low-side switch 153 and high-side switch 151 may be off.

Like that of auxiliary winding voltage VAUX, waveform 1225 may exhibit switching transitions at time 211, time 212, time 214, and time 215. For instance, from time 211 to time 212, while low-side switch 153 is on, resistor current IA may be approximately negative twenty-two point five microamperes (-22.5uA); and from time 213 to time 214, while high-side switch 151 is on, resistor current IA may be approximately positive seventeen point five microamperes (17.5uA).

According to the teachings herein, volt-sec on-time circuit 1235 may indicate when to turn off high-side switch 151 through state voltage VCX. Accordingly, waveform 1226 may exhibit a transition immediately prior to time 214 so that at time 214, high-side switch 151 turns off.

As one of skill in the art may appreciate, waveform 1225 of resistor current IA, like that of auxiliary winding voltage VAUX, may depend upon operating conditions and upon configuration. For instance, when auxiliary winding 106 is wound in an opposite direction so that the winding "dot" connects to ground, then the auxiliary winding voltage VAUX may have opposite polarity to that of FIG. 1 and FIG. 2. Accordingly, the waveforms of auxiliary winding voltage VAUX and corresponding resistor current IA may have opposite polarity.

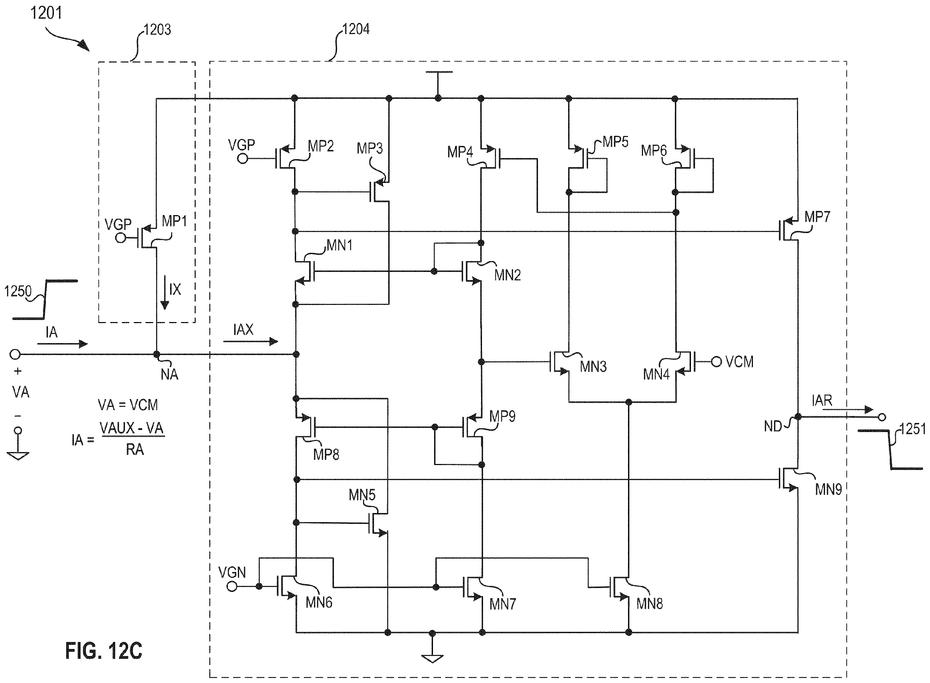

FIG. 12C illustrates a buffer circuit 1201 according to an embodiment of the present disclosure. As discussed above, buffer circuit 1201 may include offset correction circuit 1203 and current buffer 1204. As illustrated, offset correction circuit 1203 may include a p-channel field effect transistor (PFET) MP1. The gate of PFET MP1 may receive a bias potential VGP, and the drain of PFET MP1 may be coupled to node NA to add an offset correction current IX to resistor current IA.

Also as illustrated, current buffer 1204 may be realized with p-channel field effect transistors (PFETs) MP2-MP9 and n-channel field effect transistors (NFETs) MN1-MN9. A bias potential VGP may be provided to the gate of PFET MP2, and a bias potential VGN may be provided to the gates of NFETs MN6-MN8. During operation, by virtue of feedback and circuit configuration, the current buffer 1204 may provide bias voltage VA at node NA that is substantially equal to a bias reference VCM at the gate of NFET MN4. For instance, if bias reference VCM is equal to two point five volts (2.5V), then the bias voltage VA may be regulated to 2.5V plus or minus any offset.

Additionally, by virtue of circuit configuration, current buffer 1204 may provide buffered current IAR from the drain of NFET MN9 and the drain of PFET MP7, both coupled at node ND. Although the buffered current IAR may be opposite in sign to that of input current IAX as depicted respectfully by waveform 1250 and waveform 1251 of input current IAX and buffered current IAR, other configurations are possible. For instance, a realization of current buffer 1201 may include additional components whereby buffered current IAR replicates input current IAX without reversing polarity or direction of current.

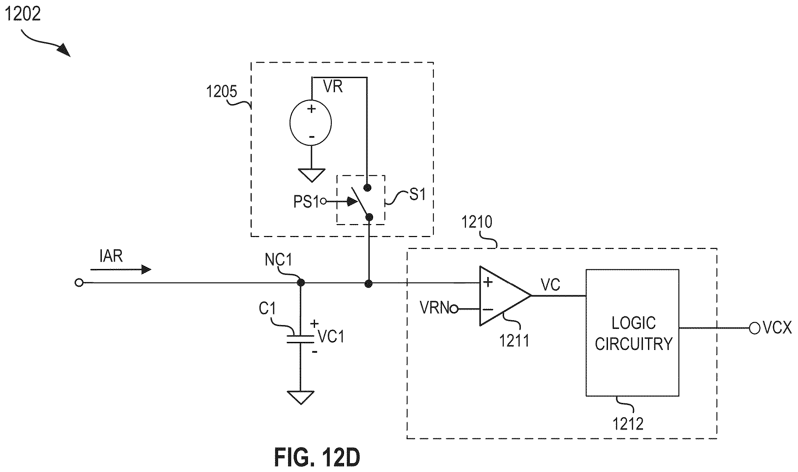

FIG. 12D illustrates a trigger circuit 1202 according to an embodiment of the present disclosure. Trigger circuit 1202 includes a switched voltage source 1205, a capacitor C1, and a comparator circuit block 1210. Capacitor Cl is connected to an input of comparator circuit block 1210 and to the switched voltage source 1205 at node NC1. Prior to the start of a switching cycle (e.g., a switching period TSW), the capacitor voltage VC1 at node NC1 may be pre-charged to reference voltage VR by the switched voltage source 1205; and during the switching cycle (e.g., the switching period TSW), the capacitor voltage VC1 may vary as function of buffered current IAR while switch S1 is open.

Accordingly, prior to the start of a switching cycle (e.g., switching period TSW), switch S1 may be closed by switch signal PS1; and during the switching cycle, switch S1 may be opened by switch signal PS1.

As illustrated, comparator circuit block 1210 may include a comparator 1211 and logic circuitry 1212. During a switching cycle (e.g., switching period TSW), comparator 1211 may compare capacitor voltage VC1 to a comparator reference voltage VRN. Comparator reference voltage VRN may be selected, programmed, and/or derived so that during the switching cycle, comparator 1211 changes state in response to capacitor voltage VC1 crossing reference voltage VR. For instance, comparator reference voltage VRN may be set to a value equal to or substantially equal to reference voltage VR plus or minus any offset.

Comparator circuit block 1210 may also include logic circuitry 1212. Logic circuitry 1212 may receive a comparator output voltage VC and provide state voltage VCX. For instance, logic circuitry 1212 may include latches, switches, logic gates, and/or one-shot circuits to ensure state voltage VCX is provided as a pulse following a transition of comparator output voltage VC.

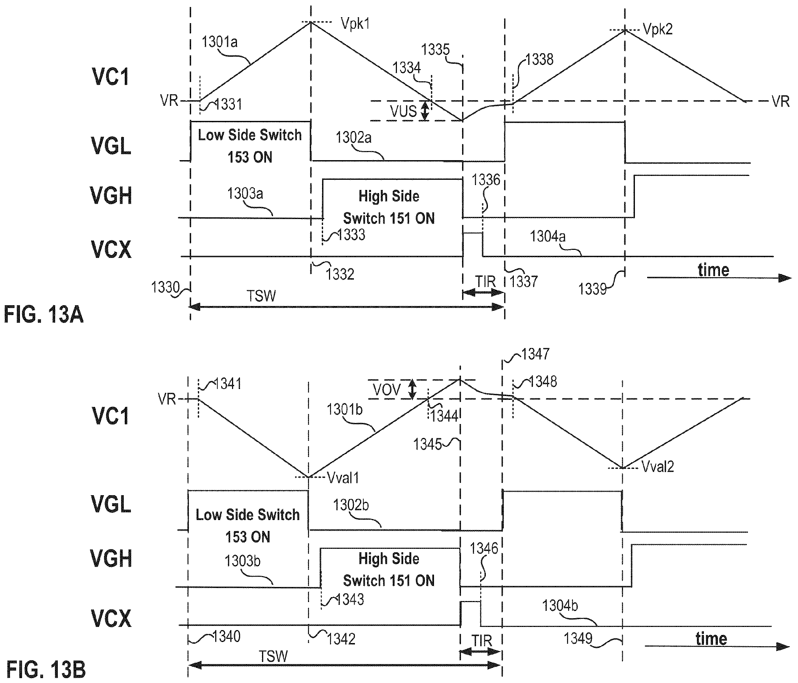

**FIG. 13A** illustrates waveforms 1301a-1304a corresponding with capacitor voltage VC1, low-side gate voltage VGL, high-side gate-voltage VGH, and state voltage VCX according to an embodiment of the present disclosure. Waveforms 1301a-1304a are plotted starting at time 1330. With reference to FIG. 1, low-side gate voltage VGL may drive low-side switch 153, and high-side gate voltage VGH may drive high-side switch 151. For instance, from time 1330 to time 1332 low-side gate-voltage VGL drives low-side switch 153 to operate in the on state; and from time 1333 to time 1335 high-side gate voltage VGH drives high-side switch 151 to operate in the on state.

Additionally, a switching period TSW may be conveniently defined from time 1330 when low-side switch 153 turns on to time 1337 when low-side switch 153 again turns on. Therefore, as depicted by waveform 1302a, a switching cycle may begin at time 1330 with a low-to-high transition of low-side gate voltage VGL. Also, as depicted by waveform 1301a, from time 1330 to time 1331, the capacitor voltage VC1 may be held constant to reference voltage VR.

According to the teachings herein, waveforms 1301a-1304a may also correspond with an auxiliary winding configuration (i.e., a dot winding direction configuration) like that presented in FIG. 1. Therefore, as depicted by waveform 1301a, after a short delay (e.g., a delay of one-hundred nanoseconds), capacitor voltage VC1 may increase from its initial value (e.g., reference voltage VR). Then, at time 1332 low-side switch 153 turns off and capacitor voltage VC1 may reach a peak Vpk1.

With reference to waveform 1303a, at time 1333 after a break-before-make delay (e.g., a delay of two-hundred fifty nanoseconds), high-side switch 151 may turn on. As depicted by waveform 1301a, from time 1333 to time 1335, while high-side switch 151 is on, the capacitor volage VC1 may decrease.

With reference to waveform 1304a and according to the teachings herein, at time 1335 state voltage VCX transitions high indicating when to turn high-side switch 151 off. Accordingly, at time 1335 and immediately following the transition of state voltage VCX, the high-side switch 151 turns off (i.e., high-side voltage VGH transitions low). Although waveform 1304a illustrates state voltage VCX as exhibiting a short pulse between time 1335 and time 1336, other waveforms may be possible provided the transition edge at time 1335 triggers the high-side switch 151 to turn off.

As shown by waveform 1301a, there may be undershoot of the capacitor voltage VC1 starting at time 1334. Undershoot may be due, at least in part, to non-ideal behavior of circuitry including comparator circuit block 1210. Ideally, state voltage VCX would transition high concurrently with the crossing of capacitor voltage VC1 and reference voltage VR at time 1334. However, due to circuit delay and/or offset, comparator circuit block 1210 may not respond until time 1335 giving rise to a total undershoot voltage VUS.

During period TIR, from time 1335 to time 1337, both the high-side switch 151 and the low-switch 153 are off. Additionally, switch S1 may conduct so that switched voltage source 1205 provides reference voltage VR to node NC1. Therefore, as illustrated by waveform 1301a, the capacitor voltage VC1 recovers (i.e., rises) towards its starting value (i.e., towards reference voltage VR). For stable operation and circuit performance, the capacitor voltage VC1 should be equal to or substantially equal to reference voltage VR before the start of a subsequent switching cycle.

Unfortunately, there may be system modes of operation including transients and/or heavy load conditions whereby the period TIR is relatively short (e.g., is one-hundred nanoseconds or less). Moreover, due to process and/or device limitations, switched voltage source 1205 may not have enough bandwidth (i.e., may not be fast enough) to allow capacitor voltage VC1 to recover to reference voltage VR.

Therefore, as illustrated by waveforms 1301a, 1302a, the low-side switch 153 may turn on at time 1338 before capacitor voltage VC1 can reach an initial value corresponding with reference voltage VR. This may, in turn, give rise to an unwanted shift error. Under these conditions the capacitor voltage VC1 may increase until it reaches its subsequent peak Vpk2 at time 1339; and due in part to shift error the subsequent peak Vpk2 at time 1339 may be less than peak Vpk1 at time 1332. Eventually, after several switching cycles, shift error may accumulate; and the capacitor voltage VC1 and its subsequent peaks may decrease until the capacitor voltage VC1 no longer is within operating range.

Similar conditions may exist for the alternative auxiliary winding configuration (i.e., a dot winding direction configuration opposite to that of FIG. 1).

For instance, **FIG. 13B** illustrates waveforms 1301b-1304b corresponding with capacitor voltage VC1, low-side gate voltage VGL, high-side gate-voltage VGH, and state voltage VCX according to an embodiment whereby auxiliary winding 106 has opposite winding polarity. When auxiliary winding 106 has opposite winding polarity (i.e., the dot side is connected to ground 107), the corresponding auxiliary winding voltage VAUX and buffered current IAR may also be opposite in sign. As such, comparator circuit block 1210 and/or switched voltage source 1205 may be reconfigured to account for the opposite winding polarity.

Accordingly, waveforms 1301b-1304b may be like waveforms 1301a-1304a except for waveform 1301b corresponding with capacitor voltage VC1; and with exception of waveform 1301b, transitions and waveform behavior at times 1341-1349 may respectively be like those at times 1331-1339. Also, like that of FIG. 13A, a switching period TSW may be defined from time 1340 to time 1347 for waveforms 1301b-1304b.

With regards to waveform 1301b, at time 1341 capacitor voltage VC1 may decrease from its initial value (e.g., reference voltage VR) and reach a valley Vval1 at time 1342 when low-side switch 153 turns off. Then, from time 1343 to time 1345, while high-side switch 151 is on, the capacitor volage VC1 may increase.

As shown by waveform 1301b, there may be overshoot of the capacitor voltage VC1 starting at time 1344. Like undershoot, overshoot may be due, at least in part, to non-ideal behavior of circuitry including comparator circuit block 1210. Therefore, comparator circuit block 1210 may not respond until time 1345 giving rise to a total overshoot voltage VOV.

As illustrated by waveforms 1301b, 1302b, the low-side switch 153 may turn on at time 1348 before capacitor voltage VC1 can reach an initial value corresponding with reference voltage VR. Under these conditions the capacitor voltage VC1 may decrease until it reaches its subsequent valley Vval2 at time 1349. By comparison the subsequent valley Vval2 at time 1349 may be greater than valley Vval1 at time 1342 due in part to shift error. Eventually, after several switching cycles shift error may accumulate; and capacitor voltage VC1 and its subsequent valleys may increase until the capacitor voltage VC1 no longer is within operating range.

Accordingly, there is a need to develop an embodiment of a trigger circuit 1202 which reduces shift error and allows capacitor voltage VC1 to remain within operating range.

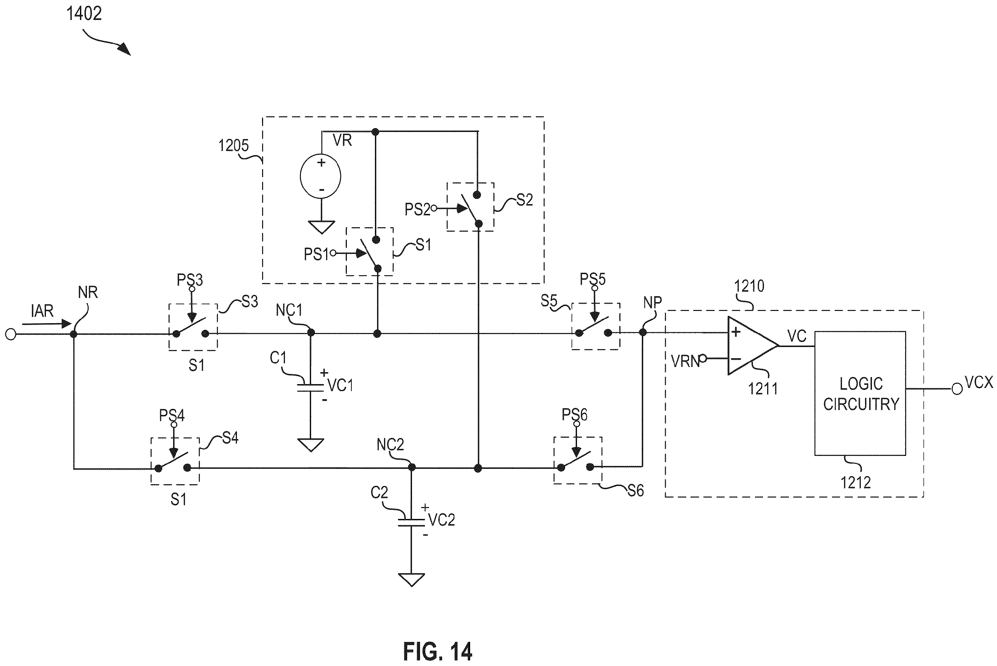

In this regard, **FIG. 14** illustrates a trigger circuit 1402 according to the teachings herein. Like trigger circuit 1202, trigger circuit 1402 includes switched voltage source 1205, comparator circuit block 1210, and capacitor C1. Additionally, trigger circuit 1402 also includes capacitor C2 and switches S2-S6. As illustrated switches S1-S6 are respectively controlled by switch signals PS1-PS6; and voltage source 1205 includes additional switch S2.

As illustrated, capacitor C1 is connected to switch S1 at node NC1. Additionally, switch S3 is connected between node NR and node NC1, and switch S5 is connected between node NP and node NC1. Therefore, switch S1 may be closed so that switched voltage source 1205 provides reference voltage VR to capacitor C1. Then, when switch S3 and switch S5 are closed, buffered current IAR may be provided to capacitor C1; and capacitor voltage VC1 may be provided to comparator circuit block 1210.

Also, capacitor C2 is connected to switch S2 at node NC2. Additionally, switch S4 is connected between node NR and node NC2, and switch S6 is connected between node NP and node NC2. Therefore, switch S2 may be closed so that switched voltage source 1205 provides reference voltage VR to capacitor C1. Then, when switch S4 and switch S6 are closed, buffered current IAR may be provided to capacitor C2; and capacitor voltage VC2 may be provided to comparator circuit block 1210.

As described herein, using capacitor C1, capacitor C2, and switches S1-S6, may advantageously allow capacitor C1 to be swapped with capacitor C2 over two switching cycles in a way that allows enough time for switched voltage source 1205 to provide voltage VR.

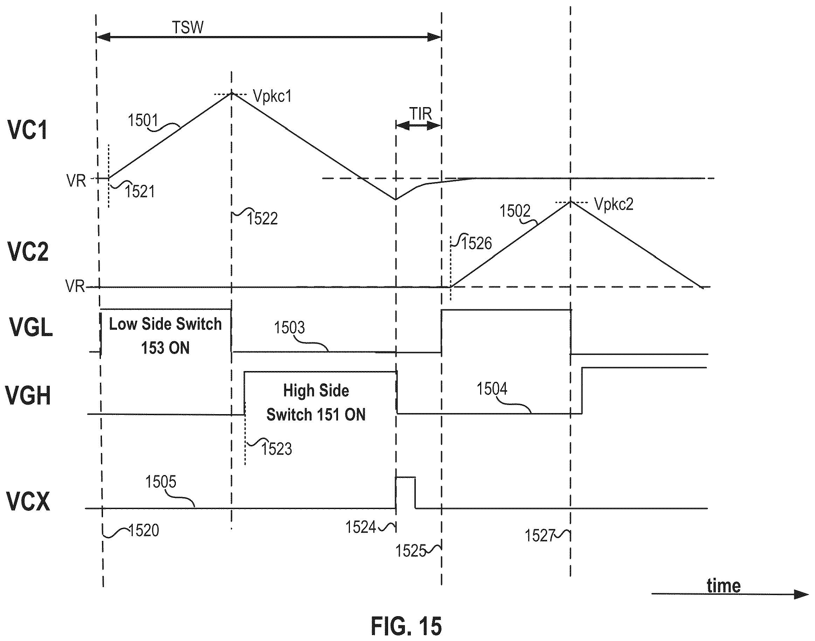

**FIG. 15** illustrates waveforms 1501-1505 corresponding with capacitor voltage VC1, capacitor voltage VC2, low-side gate voltage VGL, high-side gate voltage VGH, and state voltage VCX according to the embodiment of FIG. 14. A switching period TSW may be defined from time 1520 to time 1525. Low-side switch 153 may be on between time 1520 and time 1522; and high-side switch 151 may be on between time 1523 and time 1524. Comparator circuit block 1210 may exert state voltage VCX high at time 1524; and a new switching cycle may begin at time 1525.

At time 1521 switch S3 and switch S5 may be closed allowing capacitor voltage VC1 to increase in response to buffered current IAR. As illustrated, capacitor voltage VC1 may increase from its initial value at time 1521 (i.e., its initial value of reference volage VR) and reach a peak Vpkc1 at time 1522.

According to the teachings herein, switched voltage source 1205 may provide reference voltage VR to capacitor C2 prior to time 1525. In this way, at time 1526 capacitor voltage VC2 may be equal to or substantially equal to reference voltage VR. Then, at time 1527, capacitor voltage VC2 may reach its peak Vpkc2 free of shift error.

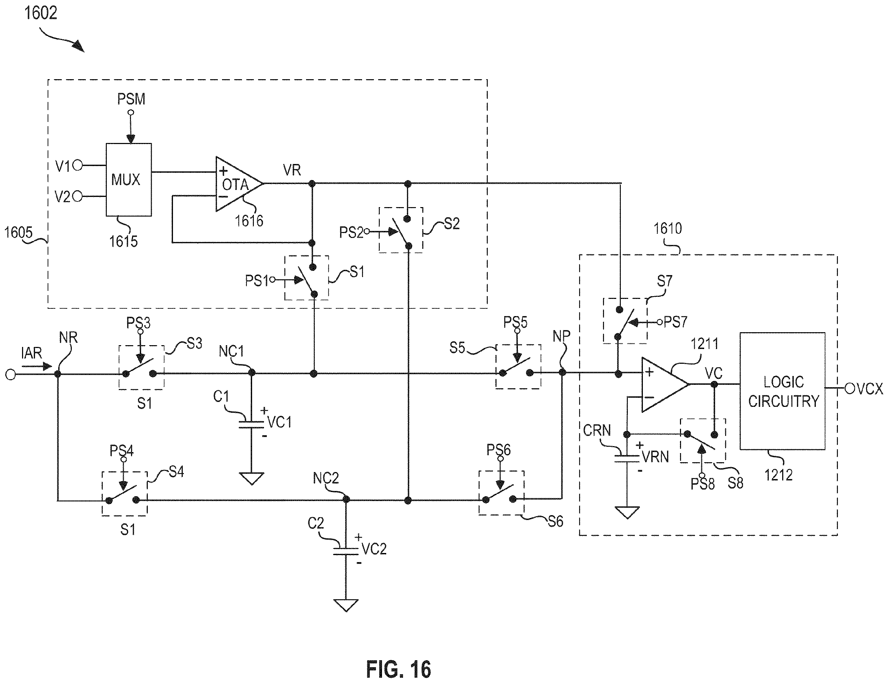

**FIG. 16** illustrates a trigger circuit 1602 according to another embodiment. Trigger circuit 1602 is like trigger circuit 1402 except switched voltage source 1205 and comparator circuit block 1210 are replaced with switched voltage source 1605 and comparator circuit block 1610, respectively.

Like switched voltage source 1205, switched voltage source 1605 includes switch S1 and switch S2. Additionally, switched voltage source 1605 includes multiplexer 1615 and operational transconductance amplifier (OTA) 1616. In response to a multiplexer control signal PSM, multiplexer 1615 may select and provide either voltage V1 or voltage V2 to the non-inverting input of OTA 1616. OTA 1616 may, in turn, provide reference voltage VR equal to or substantially equal to the selected one of voltage V1 or voltage V2.

For instance, voltage V1 may be one point five volts (1.5V) and voltage V2 may be three volts (3.0V). Then if capacitor voltage VC1 is like that of waveform 1501, it may be advantageous to select voltage V1 to allow capacitor voltage VC1 to increase from its initial value (i.e., from reference voltage VR) with sufficient common mode range. Alternatively, if the auxiliary winding 106 has opposite winding polarity and capacitor voltage VC1 decreases from its initial value (i.e., from reference voltage VR), then it may be advantageous to select voltage V2.

Although switched voltage source 1205 is shown as allowing the selection of two voltages V1, V2, other configurations allowing greater or fewer than two may be possible.

Also, like comparator circuit block 1210, comparator circuit block 1610 may include comparator 1211 and logic circuitry 1212. In addition, comparator circuit block 1610 may include capacitor CRN, switch S7, and switch S8. Switches S7, S8 may be respectively controlled by switch signals PS7, PS8 so that during a switching cycle (e.g., a switching period TSW) comparator reference voltage VRN is provided to capacitor CRN. Then by virtue of autozeroing, comparator 1211 with logic circuitry 1212 may exert a transition of the state voltage in response to a crossing of a capacitor voltage (i.e., capacitor voltage VC1 and/or capacitor voltage VC2) with the reference voltage VR.

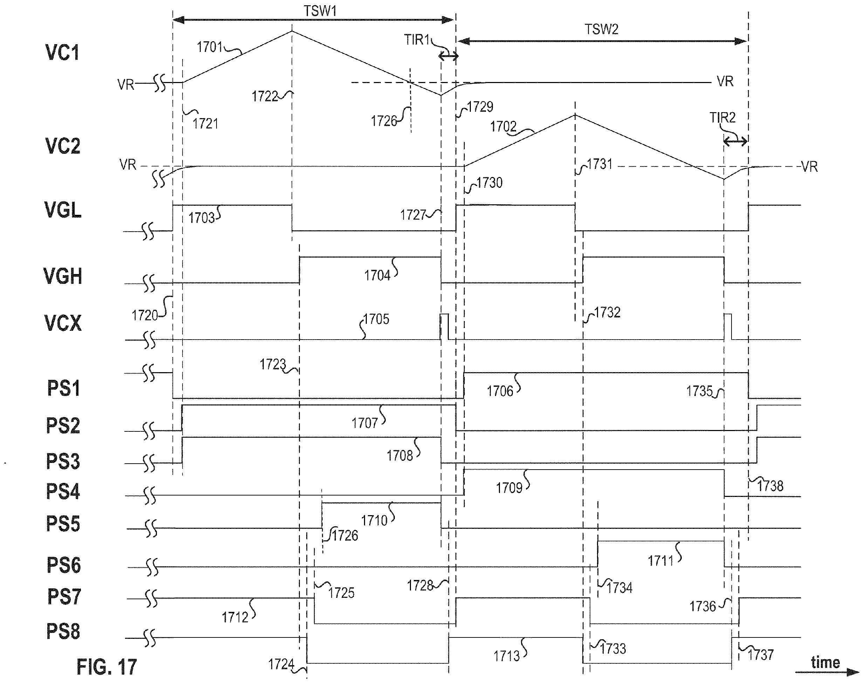

**FIG. 17** illustrates waveforms 1701-1705 corresponding respectively with capacitor voltage VC1, capacitor voltage VC2, low-side gate voltage VGL, high-side gate voltage VGH, state voltage VCX and illustrates waveforms 1706-1713 corresponding respectively with switch signals PS1-PS8.

A first switching period TSW1 may be defined from time 1720 to time 1729; and a second switching period TSW2 may be defined from time 1729 to time 1738. Low-side gate voltage VGL transitions high at time 1720, completes a first switching cycle at time 1729, and completes a second switching cycle at time 1738. During period TIR1 from time 1727 to time 1729 and period TIR2 from time 1735 to time 1338, both the high-side switch 151 and low-side switch 153 are off.

High-side gate voltage VGH transitions high at time 1723 and low at time 1727 and transitions at high at time 1732 and low at time 1735. According to the teachings herein, high-side gate voltage VGH transitions low (i.e., high-side switch 151 turns off) in response to the transition of state voltage VCX at time 1727; and high-side gate voltage VGH also transitions low in response to the transition of state voltage VCX at time 1735.

Waveforms 1706-1713 of switch signals PS1-PS8 respectively indicate the conduction state (i.e., the on-state or the off-state) of switches S1-S8 as a function of time. In the embodiment of FIG. 17, a switch (e.g., any one of switches S1-S8) may be on (i.e., conducting) when its respective switch signal (e.g., a corresponding one of switch signals PS1-PS8) is high, and a switch (e.g., any one of switches S1-S8) may be off (i.e., blocking) when its respective switch signal (e.g., a corresponding one of switch signals PS1-PS8) is low.

Therefore, switch S1 turns on at time 1730 and turns off at time 1738. Switch S2 turns on at time 1721 and turns off at time 1729. Switch S3 turns on at time 1721 and off at time 1727. Switch S4 turns on at time 1730 and off at time 1735. Switch S5 turns on at time 1726 and off at time 1727. Switch S6 turns on at time 1734 and off at time 1735. Switch S7 turns off at time 1725, on at time 1729, off at time 1733, and on at time 1737; and switch S8 turns off at time 1724, on at time 1728, off at time 1732, and on at time 1736.

With reference to trigger circuit 1602, waveforms 1706-1707 may respectively illustrate the conduction state of switches S1-S2 relating to how switched voltage source 1605 provides reference voltage VR to capacitors C1, C2; and waveforms 1708-1711 may illustrate the conduction state of switches S3-S6 relating to how buffered current IAR is provided to capacitors C1, C2 and to how capacitors C1, C2 respectively provide capacitor voltages VC1, VC2 to the comparator circuit block 1610.

Accordingly, waveforms 1706-1711 may respectively illustrate how switches S1-S6 alternate the function of (i.e., the swapping of) capacitors C1, C2 over first and second switching periods TSW1, TSW2 to give rise to waveforms 1701-1702. Thus, as illustrated by waveform 1701 of capacitor voltage VC1 and by waveform 1702 of capacitor voltage VC2, reference voltage VR may be provided to capacitor C2 while capacitor C1 receives reference voltage VR.

As shown by waveforms 1701-1702, using capacitor C1 to provide voltage VC1 during first switching period TSW1 while capacitor C2 receives reference voltage VR and then using capacitor C2 to provide voltage VC2 during second switching period TSW2 while capacitor C1 receives reference voltage VR advantageously allows enough time for switched voltage source 1605 to provide voltage VR. For instance, capacitor C2 may receive reference voltage VR for almost the entire switching period TSW1 while capacitor C1 provides capacitor voltage VC1 to comparator circuit block 1610. Then capacitor C1 may receive reference voltage VR for almost the entire switching period TSW2 while capacitor C2 provides capacitor voltage VC2 to comparator circuit block 1610.

Additionally, with reference to trigger circuit 1602, waveforms 1712-1713 may respectively illustrate the conduction state of switches S7-S8 relating to the autozeroing feature of comparator circuit block 1610. Although, comparator circuit block 1610 is shown as having an autozero feature, other configurations of comparator circuit 1610 and trigger circuit 1602 may be possible.

For instance, comparator circuit block 1610 may use a comparator 1211 that does not necessitate autozeroing. Also, as one of skill in the art may appreciate, there may be configurations of trigger circuit 1602 that allow more than two capacitors C1, C2 to be swapped during more than two switching periods TSW1, TSW2.

In the above description, numerous specific details are set forth in order to provide a thorough understanding of the present disclosure. It will be apparent, however, to one having ordinary skill in the art that the specific detail need not be employed to practice the teachings herein. In other instances, well-known materials or methods have not been described in detail in order to avoid obscuring the present disclosure.

Reference throughout this specification to "one embodiment", "an embodiment", "one example" or "an example" means that a particular feature, structure or characteristic described in connection with the embodiment or example is included in at least one embodiment of the present disclosure. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or subcombinations in one or more embodiments or examples. Particular features, structures or characteristics may be included in an integrated circuit, an electronic circuit, a logic circuit, or other suitable components that provide the described functionality. In addition, it is appreciated that the figures provided herewith are for explanation purposes to persons ordinarily skilled in the art and that the drawings are not necessarily drawn to scale.

The above description of illustrated examples of the present disclosure, including what is described in the Abstract, are not intended to be exhaustive or to be limited to the precise forms disclosed. While specific embodiments of and examples for controlling the on time of a high side switch in an AHB converter are described herein for illustrative purposes, various equivalent modifications are possible without departing from the broader spirit and scope of the present disclosure. Indeed, it is appreciated that the specific example voltages, currents, frequencies, power range values, times, etc., are provided for explanation purposes and that other values may also be employed in other embodiments and examples in accordance with the teachings herein.

The foregoing description may refer to elements or features as being "connected," "electrically connected," and/or "coupled" together. As used herein, unless expressly stated otherwise, "connected" means that one element/-feature is directly or indirectly connected to another element/feature, and not necessarily mechanically. Likewise, unless expressly stated otherwise, "coupled" means that one element/feature is directly or indirectly coupled to another element/feature, and not necessarily mechanically. Thus, although the various schematics shown in the figures depict example arrangements of elements and components, additional intervening elements, devices, features, or components may be present in an actual embodiment (assuming that the functionality of the depicted circuits is not adversely affected).

Moreover, conditional language used herein, such as, among others, "can," "could," "might," "may," "e.g.," "for example," "such as" and the like, unless specifically stated otherwise or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or that one or more embodiments necessarily include logic for deciding whether these features, elements and/or states are included or are to be performed in any particular embodiment.

While certain embodiments have been described, these embodiments have been presented by way of example only and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while the disclosed embodiments are presented in a given arrangement, alternative embodiments may perform similar functionalities with different components and/or circuit topologies, and some elements may be deleted, moved, added, subdivided, combined, and/or modified. Each of these elements may be implemented in a variety of different ways. Any suitable combination of the elements and acts of the various embodiments described above can be combined to provide further embodiments. Accordingly, the scope of the present invention is defined only by reference to the appended claims.

Although the claims presented here are in single dependency format for filing at the USPTO, it is to be understood that any claim may depend on any preceding claim of the same type except when that is clearly not technically feasible.

EMBODIMENTS

Although the present invention is defined in the attached claims, it should be understood that the present invention can also (alternatively) be defined in accordance with the following embodiments:

1. A high side switch on-time control circuit for use in an asymmetrical half-bridge (AHB) power converter, the power converter comprising a high side switch, a low side switch, and a primary side winding, the high side switch on-time control circuit comprising:

a terminal coupled to receive a signal representative of a winding voltage on the primary side winding;
a first integrator configured to integrate the signal during an on-time of the low side switch and output a first integrated value;
a second integrator configured to integrate the signal during an on-time of the high side switch and output a second integrated value; and
a first comparator configured to compare the first integrated value and the second integrated value and to output a control signal in response to the comparison, wherein the control signal is coupled to control an end of the on-time of the high side switch.

2. The high side switch on-time control circuit of embodiment 1, wherein the first integrator comprises:

a first current source providing a first current that is proportional to the winding voltage during the on-time of the low side switch;
a first switch coupled to the first current source; and
a first capacitor coupled to be charged by the first current source,
wherein the first current source is coupled to charge the first capacitor through the first switch and the first integrated value is a voltage on the first capacitor at an end of the on-time of the low side switch.

3. The high side switch on-time control circuit of embodiment 2, wherein the second integrator comprises:

a second current source providing a second current that is proportional to the winding voltage during the on-time of the high side switch;
a second switch coupled to the second current source; and
the first capacitor configured to be discharged by the second current source,
wherein the second current source is coupled to discharge the first capacitor through the second switch.

4. The high side switch on-time control circuit of embodiment 3, wherein the first comparator is configured to output the control signal to control the end of the on-time of the high side switch when the voltage on the first capacitor is discharged below a first reference voltage.

5. The high side switch on-time control circuit of embodiment 4, further comprising a third switch configured to reset the voltage on the first capacitor once during each switching cycle in response to an output of the first comparator.

6. The high side switch on-time control circuit of embodiment 5, further comprising a reset circuit coupled between the output of the first comparator and the third switch.

7. The high side switch on-time control circuit of embodiment 1, wherein the first comparator is a voltage comparator.

8. The high side switch on-time control circuit of embodiment 1, further comprising:

a first reference voltage;
a third integrator configured to integrate the first reference voltage during the on-time of the low side switch and output a third integrated value;
a second reference voltage, wherein the second reference voltage is a constant K times the first reference voltage;
a fourth integrator configured to integrate the second reference voltage during the on-time of the high side switch and output a fourth integrated value; and
a second comparator configured to compare the third integrated value and the fourth integrated value and to output a second control signal in response to the comparison, wherein the second control signal is coupled to control the end of the on-time of the high side switch.

9. The high side switch on-time control circuit of embodiment 8, wherein K equals 1.

10. The high side switch on-time control circuit of embodiment 8, wherein the third integrator comprises:

a third current source providing a first current that is proportional to the first reference voltage;
a third switch coupled to the third current source; and
a second capacitor coupled to be charged by the third current source, and
wherein the third current source is coupled to charge the second capacitor through the third switch and the third integrated value is a voltage on the second capacitor at the end of the on-time of the low side switch.

11. The high side switch on-time control circuit of embodiment 10, wherein the fourth integrator comprises:

a fourth current source providing a current that is proportional to the second reference voltage;
a fourth switch coupled to the fourth current source; and,
the second capacitor coupled to be discharged by the fourth current source, and
wherein the fourth current source is coupled to discharge the second capacitor through the fourth switch.

12. The high side switch on-time control circuit of embodiment 11, wherein the second comparator is configured to output the second control signal to control the end of the on-time of the high side switch when the voltage on the second capacitor is discharged below a third reference voltage.

13. The high side switch on-time control circuit of embodiment 12, further comprising a fifth switch configured to reset the voltage on the second capacitor once during each switching cycle in response to an output of the second comparator.

14. The high side switch on-time control circuit of embodiment 13, further comprising a reset circuit coupled between the output of the second comparator and the fifth switch.

15. The high side switch on-time control circuit of embodiment 1, further comprising: a timer,
wherein the timer comprises an input coupled to receive a signal to indicate when the high side switch turns on, and an output configured to provide a second control signal when a predetermined maximum time after the high side switch has turned on is reached.

16. The high side switch on-time control circuit of embodiment 15, wherein the predetermined maximum time is programmable.

17. A primary controller for use in an asymmetrical half-bridge (AHB) power converter, the power converter comprising a high side switch, a low side switch, and a primary side winding, the primary controller comprising:

a first terminal to be coupled to receive a first signal representative of a voltage across the primary side winding;
a second terminal to be coupled to receive a feedback signal representative of an output of the AHB power converter;
a third terminal to be coupled to receive a second signal representative of the voltage at a half-bridge node of the AHB power converter;
a low side control circuit configured to respond to the feedback signal and the second signal and to generate a low side switch control signal in response thereto; and
a high side control circuit configured to respond to the first signal and the second signal and to generate a high side switch control signal in response thereto; wherein the high side control circuit comprises:

a maximum on-time circuit configured to generate a first high side control signal to control a maximum on-time of the high side switch;
a proportional on-time circuit configured to generate a second high side control signal to control an on-time of the high side switch to be proportional to an on-time of the low side switch in a switching cycle of the AHB power converter; and
a volt-second on-time circuit, configured to receive the first signal and to generate a third high side control signal in response thereto.

18. The primary controller of embodiment 17, further comprising a fourth terminal configured to receive a programming signal to program a duration of the maximum on-time.

19. The primary controller of embodiment 17, further comprising a fourth terminal for receiving a current sense signal representative of a current through the low side switch.

20. The primary controller of embodiment 19, wherein the low side control circuit responds to the feedback signal to vary a frequency of the low side switch turn on and wherein the low side control circuit responds to the current sense signal to turn off the low side switch.

21. The primary controller of embodiment 17, further comprising a discontinuous conduction mode detection circuit configured to be responsive to the second signal to implement a deadtime period between the switching of the high side and low side switches.

22. The primary controller of embodiment 17, further comprising a high side communication circuit configured to generate a level shifted control signal to be coupled from the output of the high side control circuit to the high side switch.

23. The primary controller of embodiment 17, further comprising logic circuitry configured to receive the first and second high side control signals and to output whichever one indicates a longer on-time of the high side switch as a fourth high side control signal.

24. The primary controller of embodiment 23, wherein the logic circuitry is further configured to receive the third and fourth high side control signals and to output whichever one indicates a shorter on-time of the high side switch as the high side switch control signal.

25. The primary controller of embodiment 17, wherein the volt-second on-time circuit comprises:

a first integrator configured to integrate the first signal during the on-time of the low side switch and to output a first integrated value;
a second integrator configured to integrate the first signal during the on-time of the high side switch and to output a second integrated value; and
a first comparator configured to compare the first integrated value and the second integrated value and to output the third high side control signal in response thereto.

26. The primary controller of embodiment 25, wherein the proportional on-time circuit comprises:

a first reference voltage;
a third integrator configured to integrate the first reference voltage during the on-time of the low side switch and to output a third integrated value;
a second reference voltage, wherein the second reference voltage is a constant K times the first reference voltage;
a fourth integrator configured to integrate the second reference voltage during the on-time of the high side switch and to output a fourth integrated value; and
a second comparator configured to compare the third integrated value and the fourth integrated value and to output the second high side control signal in response thereto.

27. A method for controlling an on-time of a high side switch of an asymmetrical half-bridge power converter comprising the high side switch, a low side switch, and a primary side winding, the method comprising:

turning on the low side switch;
measuring a first signal representative of a voltage on the primary side winding during the on-time of the low side switch;
integrating the first signal during the on-time of the low side switch to generate a first integrated value;
turning off the low side switch and allowing a deadtime period to expire;
turning on the high side switch;
measuring a second signal representative of the voltage on the primary side winding during the on-time of the high side switch;
integrating the second signal during the on-time of the high side switch to generate a second integrated value;
comparing the second integrated value with the first integrated value; and
turning off the high side switch when the second integrated value exceeds the first integrated value.

28. The method of embodiment 27, wherein integrating the first signal comprises charging a capacitor with a current proportional to the first signal.
29. The method of embodiment 27, wherein integrating the second signal comprises discharging a capacitor with a current proportional to the second signal.
30. The method of embodiment 29, further comprising resetting the capacitor after turning off the high side switch and before turning on the low side switch.
31. A method for controlling an on-time of a high side switch of an asymmetrical half-bridge power converter comprising the high side switch, a low side switch, and a primary side winding, the method comprising:

generating a first high side control signal representing a maximum on-time of the high side switch;
generating a second high side control signal by:

integrating a first signal representative of a voltage on the primary side winding during the on-time of the low side switch to generate a first integrated value;
integrating a second signal representative of the voltage on the primary side winding during the on-time of the high side switch to generate a second integrated value; and
comparing the second integrated value to the first integrated value;

generating a third high side control signal by:

integrating a first reference voltage during the on-time of the low side switch to generate a third integrated value;
integrating a second reference voltage proportional to the first reference voltage during the on-time of the high side switch to generate a fourth integrated value; and
comparing the third integrated value to the fourth integrated value; and

selecting among the first high side control signal, the second high side control signal, and the third high side control signal to control the on-time of the high side switch.

32. The method of embodiment 31, wherein the selecting among the first high side control signal, the second high side control signal, and the third high side control signal further comprises:

turning off the high side switch in response to the first high side control signal if the maximum on-time has expired;

selecting which of the second high side control signal and the third high side control signal represents a longer on-time of the high side switch; and

turning off the high side switch in response to the selected signal if the maximum on-time has not yet expired.

33. A voltage-second (volt-sec) on-time circuit for use in an asymmetrical half-bridge (AHB) power converter comprising a low-side switch and a high-side switch configured to alternately conduct a primary-side current during at least one switching cycle, the volt-sec on-time circuit comprising:

a buffer circuit configured to provide a buffered current proportional to an auxiliary winding voltage of the power converter; and

a trigger circuit configured to receive the buffered current and in response provide a state voltage to indicate when to turn off the high-side switch during the at least one switching cycle.

34. The volt-sec on-time circuit of embodiment 33, wherein the buffer circuit is further configured to provide an input bias voltage and to receive an external resistor current proportional to a difference of the auxiliary winding voltage and the input bias voltage.

35. The volt-sec on-time circuit of embodiment 34, wherein the input bias voltage is substantially equal to two point five volts (2.5V).

36. The volt-sec on-time circuit of embodiment 34, wherein the buffer circuit further comprises:

a current buffer configured to provide the input bias voltage, to receive an input current, and to provide the buffered current in proportion to the input current.

37. The volt-sec on-time circuit of embodiment 36, wherein the input current comprises the external resistor current.

38. The volt-sec on-time circuit of embodiment 37, wherein the buffer circuit further comprises:

an offset correction circuit configured to provide an offset current proportional to the input bias voltage.

39. The volt-sec on-time circuit of embodiment 38, wherein the input current comprises the offset current.

40. The volt-sec on-time circuit of embodiment 36, wherein the trigger circuit comprises:

a switched voltage source;

at least one capacitor; and

a comparator circuit block configured to provide the state voltage.

41. The volt-sec on-time circuit of embodiment 40,

wherein prior to the at least one switching cycle the switched voltage source is configured to charge the at least one capacitor to a reference voltage, and

wherein during the at least one switching cycle, the at least one capacitor is configured to receive the buffered current and to provide a capacitor voltage to the comparator circuit block.

42. The volt-sec on-time circuit of embodiment 41, wherein the reference voltage is between one volt (1V) and five volts (5V).

43. The volt-sec on-time circuit of embodiment 41, wherein the comparator circuit block comprises a comparator configured to exert a transition of the state voltage in response to a crossing of the capacitor voltage and the reference voltage.

44. The volt-sec on-time circuit of embodiment 43, wherein the high-side switch is configured to turn off in response to the transition of the state voltage.

45. The volt-sec on-time circuit of embodiment 43, wherein prior to the crossing of the capacitor voltage and the reference voltage, the capacitor voltage is less than the reference voltage.

46. The volt-sec on-time circuit of embodiment 43, wherein prior to the crossing of the capacitor voltage and the reference voltage, the capacitor voltage is greater than the reference voltage.

47. The volt-sec on-time circuit of embodiment 41,

wherein the at least one capacitor comprises a first capacitor and a second capacitor; and

wherein the at least one switching cycle comprises a first switching cycle and a second switching cycle, subsequent to the first switching cycle.

48. The volt-sec on-time circuit of embodiment 47,

wherein during the first switching cycle the first capacitor is configured to receive the buffered current and provide the capacitor voltage to the comparator circuit block and the switched voltage source is configured to provide the reference voltage to the second capacitor; and

wherein during the second switching cycle the second capacitor is configured to receive the buffered current and provide the capacitor voltage to the comparator circuit block and the switched voltage source is configured to provide the reference voltage to the first capacitor.

## Claims

1. A voltage-second (volt-sec) on-time circuit for use in an asymmetrical half-bridge (AHB) power converter comprising a low-side switch and a high-side switch configured to alternately conduct a primary-side current during at least one switching cycle, the volt-sec on-time circuit comprising:

   a buffer circuit configured to provide a buffered current proportional to an auxiliary winding voltage of the power converter; and
   a trigger circuit configured to receive the buffered current and in response provide a state voltage to indicate when to turn off the high-side switch during the at least one switching cycle.

2. The volt-sec on-time circuit of claim 1, wherein the buffer circuit is further configured to provide an input bias voltage and to receive an external resistor current proportional to a difference of the auxiliary winding voltage and the input bias voltage, and
   optionally wherein the input bias voltage is substantially equal to two point five volts (2.5V).

3. The volt-sec on-time circuit of claim 2, wherein the buffer circuit further comprises: a current buffer configured to provide the input bias voltage, to receive an input current, and to provide the buffered current in proportion to the input current.

4. The volt-sec on-time circuit of claim 3, wherein the input current comprises the external resistor current.

5. The volt-sec on-time circuit of claim 4, wherein the buffer circuit further comprises: an offset correction circuit configured to provide an offset current proportional to the input bias voltage.

6. The volt-sec on-time circuit of claim 5, wherein the input current comprises the offset current.

7. The volt-sec on-time circuit of any one of claims 3 to 6, wherein the trigger circuit comprises:

   a switched voltage source;
   at least one capacitor; and
   a comparator circuit block configured to provide the state voltage.

8. The volt-sec on-time circuit of claim 7,

   wherein prior to the at least one switching cycle the switched voltage source is configured to charge the at least one capacitor to a reference voltage, and
   wherein during the at least one switching cycle, the at least one capacitor is configured to receive the buffered current and to provide a capacitor voltage to the comparator circuit block, and
   optionally wherein the reference voltage is between one volt (1V) and five volts (5V).

9. The volt-sec on-time circuit of claim 8, wherein the comparator circuit block comprises a comparator configured to exert a transition of the state voltage in response to a crossing of the capacitor voltage and the reference voltage.

10. The volt-sec on-time circuit of claim 9, wherein the high-side switch is configured to turn off in response to the transition of the state voltage.

11. The volt-sec on-time circuit of claim 9 or 10, wherein prior to the crossing of the capacitor voltage and the reference voltage, the capacitor voltage is less than the reference voltage or the capacitor voltage is greater than the reference voltage.

**12.** The volt-sec on-time circuit of any one of claims 8 to 11,
wherein the at least one capacitor comprises a first capacitor and a second capacitor; and wherein the at least one switching cycle comprises a first switching cycle and a second switching cycle, subsequent to the first switching cycle.

**13.** The volt-sec on-time circuit of claim 12,

wherein during the first switching cycle the first capacitor is configured to receive the buffered current and provide the capacitor voltage to the comparator circuit block and the switched voltage source is configured to provide the reference voltage to the second capacitor; and
wherein during the second switching cycle the second capacitor is configured to receive the buffered current and provide the capacitor voltage to the comparator circuit block and the switched voltage source is configured to provide the reference voltage to the first capacitor.

**14.** A method for controlling an on-time of a high side switch of an asymmetrical half-bridge power converter comprising the high side switch, a low side switch, and a primary side winding, the method comprising:

turning on the low side switch;
measuring a first signal representative of a voltage on the primary side winding during the on-time of the low side switch;
integrating the first signal during the on-time of the low side switch to generate a first integrated value;
turning off the low side switch and allowing a deadtime period to expire;
turning on the high side switch;
measuring a second signal representative of the voltage on the primary side winding during the on-time of the high side switch;
integrating the second signal during the on-time of the high side switch to generate a second integrated value;
comparing the second integrated value with the first integrated value; and
turning off the high side switch when the second integrated value exceeds the first integrated value.

**15.** The method of claim 14, wherein integrating the first signal comprises either:

--charging a capacitor with a current proportional to the first signal; or
--discharging a capacitor with a current proportional to the second signal, and optionally wherein the method further comprises resetting the capacitor after turning off the high side switch and before turning on the low side switch.

FIG. 1

FIG. 2

FIG. 3

EP 4 723 457 A1

420

Capacitor Voltage

LS On-time HS On-time

$V_{REF1}$

435

LS Switch Control

425b

401 $I_C$
430a
$V_{LSON}$
403
431

406
411 $V_{REF1}$

405
404
432
402 $I_{DIS}$
430b
$V_{HSON}$

409
408 RESET
407
412
413

HS Switch On Time

FIG. 4

**FIG. 5**

EP 4 723 457 A1

FIG. 6

FIG. 7

FIG. 8

FIG. 9

EP 4 723 457 A1

1000

Turn on low side switch and measure the voltage across a primary-side auxiliary winding ($V_{AUX}$) ~ 1010

Integrate $V_{AUX}$ during the low side switch on time and store the resulting value ($V_{LSON} * T_{LSON}$) ~ 1020

Turn off low side switch and wait for a Deadtime period to expire ~ 1030

Turn on high side switch and measure $V_{AUX}$ ~ 1040

Integrate $V_{AUX}$ during the high side switch on time and calculate ($V_{HSON} * T_{HSON}$) ~ 1050

Compare ($V_{HSON} * T_{HSON}$) with ($V_{LSON} * T_{LSON}$) ~ 1060

~ 1070

No

Is ($V_{HSON} * T_{HSON}$) > ($V_{LSON} * T_{LSON}$)

Yes

Turn off high side switch ~ 1080

FIG. 10

Turn on low side switch ⌐1110

1100

1111 — Measure the voltage across a primary-side auxiliary winding ($V_{AUX}$)

Generate a first reference voltage ($V_{REF5}$) ⌐1112

1113 — Integrate $V_{AUX}$ during the low side switch on time and store the resulting value ($V_{LSON} * T_{LSON}$)

Integrate $V_{REF}$ during the low side switch on time and store the resulting value ($V_{REF5} * T_{LSON}$) ⌐1114

1120 — Turn off low side switch, wait for a Deadtime period to expire and then turn on high side switch

1121 — Measure $V_{AUX}$

Generate a second reference voltage ($KV_{REF5}$) ⌐1122

1124

1123 — Integrate $V_{AUX}$ during the high side switch on time and calculate ($V_{HSON} * T_{HSON}$)

Integrate ($KV_{REF5}$) during the low side switch on time and store the resulting value ($KV_{REF5} * T_{HSON}$)

Start a timer ⌐1130

Compare ($V_{HSON} * T_{HSON}$) with ($V_{LSON} * T_{LSON}$)

Compare ($KV_{REF5} * T_{HSON}$) with ($V_{REF5} * T_{LSON}$)

1125

1126

No — Is ($V_{HSON} * T_{HSON}$) > ($V_{LSON} * T_{LSON}$) AND Is ($KV_{REF5} * T_{HSON}$) > ($V_{REF5} * T_{LSON}$) — No

1140

Yes

1135

Has the elapsed time of the timer exceeded a predetermined maximum time period — No

Yes

1150

Turn off high side switch

**FIG. 11**

EP 4 723 457 A1

$$IA = \frac{VAUX - VA}{RA}$$

**FIG. 12A**

**FIG. 12B**

**FIG. 12C**

$$VA = VCM$$

$$IA = \frac{VAUX - VA}{RA}$$

FIG. 12D

FIG. 13A

FIG. 13B

FIG. 14

FIG. 15

FIG. 16

FIG. 17

Europäisches
Patentamt

European
Patent Office

Office européen
des brevets

# EUROPEAN SEARCH REPORT

**Application Number**

EP 25 20 6032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/275275 A1 (YANG TA-YUNG [TW] ET AL) 15 August 2024 (2024-08-15) | 1-11,14,15 | INV.<br>H02M1/00 |
| A | * figures 1-8 *<br>* paragraph [0031] *<br>* paragraph [0045] - paragraph [0049] *<br>----- | 12,13 | H02M3/00<br>H02M3/335 |
| A | US 2022/416644 A1 (XU XIANGYONG [CN]) 29 December 2022 (2022-12-29)<br>* figures 4-10 *<br>----- | 1-15 | |

**TECHNICAL FIELDS SEARCHED (IPC)**

H02M

The present search report has been drawn up for all claims

| Place of search | Date of completion of the search | Examiner |
|---|---|---|
| The Hague | 20 February 2026 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 6032

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | | Publication date |
|---|---|---|---|---|---|
| US 2024275275 | A1 | 15-08-2024 | CN | 118508756 A | 16-08-2024 |
| | | | TW | 202433837 A | 16-08-2024 |
| | | | US | 2024275275 A1 | 15-08-2024 |
| US 2022416644 | A1 | 29-12-2022 | CN | 113937988 A | 14-01-2022 |
| | | | US | 2022416644 A1 | 29-12-2022 |

EPO FORM P0459

For more details about this annex : see Official Journal of the European Patent Office, No. 12/82

EP 4 723 457 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63703463

- US 32581025